(19) Europäisches Patentamt
European Patent Office
Office européen des brevets

(11) **EP 3 037 863 A1**

(12) **EUROPÄISCHE PATENTANMELDUNG**

(43) Veröffentlichungstag:
**29.06.2016  Patentblatt 2016/26**

(51) Int Cl.:
*G02B 23/18* [(2006.01)]    *G02B 23/12* [(2006.01)]

(21) Anmeldenummer: **15198021.6**

(22) Anmeldetag: **04.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **23.12.2014  DE 102014119580**

(71) Anmelder: **Carl Zeiss Sports Optics GmbH 35576 Wetzlar (DE)**

(72) Erfinder:
• **ERNST, Michael 35764 Sinn (DE)**
• **TEROERDE, Steffen 35037 Marburg (DE)**

(74) Vertreter: **Blumbach Zinngrebe Patentanwälte Alexandrastrasse 5 65187 Wiesbaden (DE)**

(54) **DIGITALES OPTISCHES GERÄT MIT KNICKBRÜCKE**

(57)   Die Erfindung betrifft ein digitales optisches Gerät mit zwei Okularen und Knickbrücke zur Anpassung des Okularabstandes an die Augenweite des Benutzers. In dem von dem Bildsensor aufgenommenen Bild wird ein um einen ersten Kippwinkel relativ zu dem Bildsensor verkippter erster Begrenzungsrahmen definiert, der einen ersten Ausschnitt aus dem von dem Bildsensor aufgenommenen Bild begrenzt, wobei der erste Kippwinkel in Abhängigkeit des Knickwinkels definiert wird. Der von dem verkippten ersten Begrenzungsrahmen begrenzte erste Ausschnitt oder ein weiterer Ausschnitt daraus werden an das erste oder zweite Display übertragen und unter Beibehaltung der absoluten Orientierung des aufgenommenen Bildes relativ zur beobachteten Szene bzw. relativ zur Horizontalen, d.h. ohne Drehung des aufgenommenen Bildes bzw. des jeweiligen BildAusschnitts relativ zur beobachteten Szene bzw. relativ zur Horizontalen von dem ersten oder zweiten mechanisch verkippten Display dargestellt.

Fig. 5

**Beschreibung**

Gebiet der Erfindung

Die Erfindung betrifft ein digitales optisches Gerät mit zwei Okularen und einer Knickbrücke zur Anpassung des Okularabstandes an die Augenweite des Benutzers, insbesondere ein digitales Fernglas.

Hintergrund der Erfindung

Ferngläser sind vorwiegend in binokularer Ausführung erhältlich, um entfernte Objekte vergrößert mit beiden Augen betrachten zu können. Klassische analoge Ferngläser sind hierfür typischerweise in Linsenbauweise, z.B. sogenannte Theater- oder Operngläser, oder als Prismenferngläser ausgeführt. Ein klassisches analoges Fernglas besteht aus zwei miteinander verbundenen Fernrohren mit jeweils einem Objektiv, einem Prismensystem und einem Okular. Bei jedem der beiden Fernrohre wird ein von dem Objektiv erzeugtes Zwischenbild mit dem zugehörigen Okular betrachtet, wobei das Okular zusammen mit der jeweiligen Augenlinse des Benutzers ein Bild auf der Netzhaut erzeugt.

Bei einem digitalen Fernglas - manchmal auch als elektronisches Fernglas bezeichnet - bildet das Objektiv zunächst auf einen elektronischen Bildsensor, z.B. einen zweidimensional auflösenden CCD- oder CMOS-Chip ab. Das so von dem Bildsensor digital oder elektronisch aufgenommene Bild kann digital oder elektronisch verarbeitet werden und auf einem oder mehreren elektronischen Displays dargestellt werden. Oftmals besitzen digitale Ferngläser lediglich ein Objektiv und lediglich einen Bildsensor, dessen Bild auf einem linken und rechten Display dargestellt wird. Solche Ferngläser verfügen daher, obwohl sie nur ein Objektiv besitzen, trotzdem über ein linkes und rechtes Okular, damit der Benutzer mit dem linken Auge durch das linke Okular das linke Display und mit dem rechten Auge durch das rechte Okular das rechte Display betrachten kann. Da ein solches digitales Fernglas zwei Okulare besitzt, kann auch hierbei von einem digitalen binokularen Fernglas gesprochen werden, obwohl nur ein Objektiv vorhanden ist. Ein Vorteil eines digitalen Fernglases ist beispielsweise, dass ohne weiteren optischen Aufwand das betrachtete Bild gleichzeitig zur binokularen Betrachtung noch aufgenommen, z.B. gefilmt und elektronisch gespeichert werden kann. Ein binokulares Fernglas kann darüber hinaus weitere optische oder elektronische Komponenten, wie z.B. eine Bildstabilisierung enthalten.

Um den lateralen Okularabstand bei einem binokularen Fernglas an die individuelle Distanz der Augenpupillen des Benutzers, die sogenannte Augenweite, anzupassen, kann die Brücke des Fernglases als sogenannte Knickbrücke ausgebildet sein. Bei einem Fernglas mit Knickbrücke sind die beiden Okulare über eine Gelenkeinrichtung der Knickbrücke mit zumindest einem Schwenkgelenk schwenkbar miteinander verbunden.

Somit wird mittels der Schwenkbewegung der beiden Okulare durch den Benutzer der Okularabstand an die individuelle Augenweite angepasst. Ein typisches Intervall für die Verstellung des Okularabstandes kann im Bereich von etwa 55 mm bis 75 mm liegen.

Größere Ferngläser besitzen typischerweise eine Gelenkeinrichtung mit einem einzigen zentralen Schwenkgelenk, an welchem die beiden Okulare gleichartig entgegengesetzt nach unten geschwenkt werden, um den Okularabstand zu verringern. Bei kleineren Ferngläsern besitzt die Knickbrücke häufig ein starres zentrales Brückenteil und ein erstes und zweites dezentrales Schwenkgelenk für das erste bzw. zweite Okular, wobei das erste und zweite dezentrale Schwenkgelenk unabhängig voneinander schwenkbar sind, so dass jedes der beiden Okulare unabhängig von dem jeweils anderen Okular geschwenkt werden kann. Ein solches Fernglas wird häufig als Kompaktfernglas bezeichnet.

Typischerweise sind der Bildsensor und die beiden Displays rechteckig, und das von dem Bildsensor aufgenommene Bild wird eins-zu-eins bezogen auf die rechteckige Form des Bildsensors und der Displays auf den beiden Displays dargestellt. D.h. die Orientierung des dargestellten Bildes relativ zu dem Display bleibt erhalten, unabhängig von der Stellung der Knickbrücke und damit unabhängig von der absoluten Orientierung des Displays relativ zur Horizontalen. Mit anderen Worten dreht sich das von dem Display dargestellte und von dem Benutzer betrachtete Bild gemeinsam mit dem Display um eine Achse parallel zur optischen Achse relativ zur Horizontalen, wenn der Benutzer den Knickwinkel der Knickbrücke verstellt. Das führt dazu, dass sich das linke Bild gemeinsam mit dem linken Display entgegen dem Uhrzeigersinn und das rechte Bild gemeinsam mit dem rechten Display mit dem Uhrzeigersinn drehen, wenn der Benutzer die beiden Okulare nach unten schwenkt und den Schwenkwinkel der Knickbrücke verringert, um damit den Okularabstand zu verkleinern. Die damit verbundene Drehung des vom Benutzer betrachteten Bildes ist typischerweise unerwünscht.

In den Druckschriften JP 11-064740 und JP 11-112851 ist jeweils ein Binokular mit einer digitalen Kamera beschrieben. Eine Bildverkippung in Zusammenhang mit einer Knickbrückenstellung wird nicht betrachtet.

Die JP 2004-191861 beschreibt ein binokulares System, bei welchem ein bildgebendes Element in den Strahlengang eingeführt wird, um ein Bild aufzunehmen. Das System enthält Mittel zur Bestimmung des Rotationswinkels in Form eines leitenden Musters. Bilddaten werden durch eine segmentweise Bildbearbeitung korrigiert. Der Benutzer betrachtet das Bild nicht über Displays, sondern klassisch über optische Elemente. Es findet keine Darstellung des aufgenommenen Bildes in dem Fernglas statt. Somit ist dieses binokulare System kein digitales Fernglas, sondern ein klassisches analoges Fernglas, bei welchem lediglich temporär ein CCD in einen der beiden optischen Strahlengänge hinter dem Prismensystem eingeschoben werden kann. Während das CCD in den Strahlengang eingeschoben ist, ist dieser Strahlengang für den Benutzer blockiert.

In dem US-Patent US 7,164,528 B2 wird vorgeschlagen, in einem digitalen Fernglas mit einem Objektiv und einem Sensor jeweils ein bildanzeigendes Feld auf zwei LCDs zu definieren und anschließend das Bild auf den jeweiligen LCDs zu drehen. Für den Benutzer ist so zwar innerhalb des Okulars ein seitenrichtiges und aufrechtes, rechteckiges Bild in den bildanzeigenden Feldern zu sehen, jedoch sind in nachteiliger Weise die bildanzeigenden Felder erheblich kleiner als das jeweilige LCD, so dass ein großer Teil der LCDs ungenutzt bleibt bzw. die LCDs erheblich größer sein müssen als das mit dem jeweiligen Okular sichtbare Feld. Dies kann sich nachteilig auf die Kosten, den Stromverbrauch, die Platzverhältnisse und die Bauform der Okulare auswirken.

Allgemeine Beschreibung der Erfindung

Die Erfindung hat sich daher allgemein die Aufgabe gestellt, ein digitales optisches Gerät, insbesondere ein digitales Ferngles mit einer Knickbrücke bereit zu stellen, bei welchem unabhängig von der Verstellung der Knickbrücke das auf den Displays mit den Okularen betrachtete Bild seine Orientierung relativ zur beobachteten Szene bzw. relativ zur Horizontalen beibehält und aufrecht bleibt.

Ein weiterer Aspekt der Aufgabe ist es, ein solches digitales optisches Gerät, insbesondere ein solches digitales Ferngles mit einer Knickbrücke bereit zu stellen, bei welchem die Fläche der Displays optimal ausgenutzt werden kann.

Ein weiterer Aspekt der Aufgabe ist es, ein solches digitales optisches Gerät, insbesondere ein solches digitales Ferngles mit einer Knickbrücke bereit zu stellen, bei welchem Kosten und Energieverbrauch der Displays eingespart werden kann und welches eine kompakte Bauform der Okulare ermöglicht.

Die Aufgabe der Erfindung wird durch den Gegenstand der unabhängigen Ansprüche gelöst. Vorteilhafte Weiterbildungen der Erfindung sind in den Unteransprüchen definiert.

Die Erfindung betrifft ein digitales optisches Gerät, insbesondere ein digitales Ferngles - manchmal auch als elektronisches optisches Gerät, insbesondere elektronisches Ferngles bezeichnet - mit Knickbrücke zur Anpassung des Okularabstandes an die Augenweite des Benutzers.

Das digitale optische Gerät umfasst ein erstes Okular mit einem ersten elektronischen Display für das erste Auge des Benutzers, ein zweites Okular mit einem zweiten elektronischen Display für das zweite Auge des Benutzers und ein Objektiv, welches eine optische Achse definiert und eine beobachtete Szene auf einen elektronischen Bildsensor abbildet. Der Bildsensor ist z.B. ein herkömmlicher zweidimensional auflösender, typischerweise rechteckiger CCD- oder CMOS-Bildsensor.

Das digitale optische Gerät umfasst ferner eine Knickbrücke mit einer Gelenkeinrichtung, mittels welcher das erste und zweite Okular parallel zur optischen Achse schwenkbar miteinander verbunden sind. Der Benutzer kann hiermit den Okularabstand zwischen dem ersten und zweiten Okular an seine individuelle Augenweite anpassen, indem der Knickwinkel der Gelenkeinrichtung verstellt wird. Der Knickwinkel wird gebildet als Winkel in der Ebene senkrecht zur Schwenkachse der Gelenkeinrichtung zwischen dem ersten und zweiten Okular bezogen auf die Gelenkeinrichtung. Durch die Verstellung des Knickwinkels der Gelenkeinrichtung verkippt das erste und/oder zweite Display mechanisch in der Ebene senkrecht zur optischen Achse relativ zu dem Bildsensor um eine Achse parallel zu der optischen Achse.

Erfindungsgemäß wird nun in dem von dem Bildsensor aufgenommenen Bild ein um einen ersten Kippwinkel relativ zu dem Bildsensor um eine Achse parallel zu der optischen Achse verkippter erster Begrenzungsrahmen definiert, der einen ersten relativ zu dem Bildsensor schräggestellten Ausschnitt aus dem von dem Bildsensor aufgenommenen Bild begrenzt. Mit anderen Worten verlaufen die Kanten des ersten Begrenzungsrahmens schräg zu den Kanten eines rechteckigen Bildsensors. Unter der Definition eines verkippten Begrenzungsrahmens und der damit verbundenen Begrenzung des schräggestellten Ausschnitts ist zu verstehen, dass nicht das aufgenommene Bild gedreht wird, sondern das aufgenommene Bild lediglich schräg ausgeschnitten wird, die Orientierung des aufgenommenen Bildes relativ zur beobachteten Szene aber beibehalten wird. Bei Beobachtung einer Szene (außer senkrecht nach oben oder unten) bedeutet dies, dass trotz Verstellung der Knickbrücke die Orientierung des aufgenommenen Bildes zur Horizontalen beibehalten wird.

Mit anderen Worten wird der erste Kippwinkel des ersten Begrenzungsrahmens in Abhängigkeit des aktuell eingestellten Knickwinkels der Gelenkeinrichtung entsprechend der mechanischen Verkippung des ersten oder zweiten Displays definiert.

Dann wird der von dem verkippten ersten Begrenzungsrahmen begrenzte erste Ausschnitt aus dem von dem Bildsensor aufgenommenen Bild oder aus einem Zwischen-Ausschnitt daraus an das erste oder zweite Display übertragen und von dem ersten oder zweiten mechanisch verkippten Display dargestellt.

Es wird also das Bild eines Objekts der beobachteten Szene unter Beibehaltung der Orientierung relativ zu der beobachteten Szene - und nicht relativ zu dem sich in Abhängigkeit des Knickwinkels jeweils verkippenden Display - an das erste oder zweite Display übertragen und unabhängig von dem momentan eingestellten Knickwinkel unter Beibehaltung der Orientierung des Bildes des Objekts relativ zu der beobachteten Szene - und nicht relativ zu dem sich in Abhängigkeit des Knickwinkels jeweils verkippenden Display - auf dem ersten bzw. zweiten Display dargestellt, so dass beim Verstellen des Knickwinkels nicht das dargestellte Bild des Objekts auf dem ersten bzw. zweiten Display gedreht wird, sondern das von dem Bildsensor aufgenommene Bild lediglich schräg ausgeschnitten und die Orientierung des Bildes des Objekts von der Aufnahme mittels des Bildsensors bis zur Darstellung auf dem ersten bzw. zweiten Display relativ zu der beobachteten Szene unabhängig von dem momentan eingestellten Knickwinkel beibehalten wird.

Die Übertragung und Ansteuerung des jeweiligen Displays erfolgt also unter Beibehaltung der absoluten Orientierung des aufgenommenen Bildes relativ zur beobachteten Szene bzw. relativ zur Horizontalen, d.h. ohne Drehung des aufgenommenen Bildes relativ zur beobachteten Szene bzw. relativ zur Horizontalen. Mit anderen Worten bleibt das aufgenommene Bild von der Aufnahme mit dem Bildsensor bis zur Darstellung auf dem jeweiligen Display oder in jedem Prozessschritt aufrecht relativ zur beobachteten Szene und relativ zur Horizontalen, so dass Linien, die auf dem Bildsensor in Bezug auf die Umgebung horizontal und vertikal verlaufen, von der Aufnahme mit dem Bildsensor bis zur Darstellung auf dem jeweiligen Display oder in jedem Prozessschritt horizontale und vertikale Linien bleiben. Mit anderen Worten wird aus dem von dem Bildsensor aufgenommenen Bild ein relativ zu dem Bildsensor schräggestellter erster Ausschnitt genommen, welcher bei der Darstellung auf dem ersten oder zweiten Display das erste bzw. zweite Display im Wesentlichen vollständig ausfüllt. Der erste bzw. zweite Ausschnitt wird also entsprechend der durch die Verstellung der Knickbrücke erzeugten mechanischen Verkippung des ersten bzw. zweiten Displays bereits "verkippt ausgeschnitten", aber bei der Übertragung an das jeweilige Display und bei der Darstellung auf dem jeweiligen Display relativ zur beobachteten Szene bzw. relativ zur Horizontalen nicht gedreht. Somit bleibt die Orientierung des aufgenommenen Bildes - mit anderen Worten des Bildinhalts - relativ zu dem Bildsensor bzw. relativ zu dem digitalen optischen Gerät als Ganzem von der Aufnahme des Bildes mit dem Bildsensor bis zur Darstellung auf dem ersten und zweiten Display erhalten.

Das jeweils bereits auf dem Bildsensor schräg ausgeschnittene und auf dem ersten bzw. zweiten Display dargestellte Bild kann daher das Display vollständig ausfüllen, so dass in vorteilhafter Weise eine Einbuße an nutzbarer Displayfläche, die z.B. durch eine Drehung des Bildes auf dem Display entstehen würde, vermieden werden kann. Dadurch kann die Fläche der Displays des digitalen optischen Geräts unabhängig vom eingestellten Knickwinkel, also bei jedem aktuell eingestellten Knickwinkel, vollständig ausgenutzt werden.

Vorzugsweise ist der erste schräggestellte Ausschnitt kleiner als das von dem Bildsensor aufgenommene Bild, und der erste Ausschnitt liegt vorzugsweise bei jedem einstellbaren Knickwinkel innerhalb der Sensorfläche des Bildsensors.

Vorzugsweise entspricht für jeden eingestellten Knickwinkel der Gelenkeinrichtung der erste Kippwinkel des ersten Begrenzungsrahmens dem Verkippungswinkel der mechanischen Verkippung des ersten oder zweiten Displays, und der von dem verkippten ersten Begrenzungsrahmen begrenzte erste Ausschnitt aus dem von dem Bildsensor aufgenommenen Bild wird ohne Drehung des aufgenommenen Bildes relativ zur beobachteten Szene bzw. relativ zur Horizontalen und relativ zu dem digitalen optischen Gerät als Ganzem an das erste oder zweite Display übertragen und ohne Drehung des aufgenommenen Bildes relativ zur beobachteten Szene bzw. relativ zur Horizontalen und relativ zu dem digitalen optischen Gerät als Ganzem auf dem ersten oder zweiten Display dargestellt. Demnach wird der von dem verkippten ersten Begrenzungsrahmen begrenzte erste Ausschnitt aus dem von dem Bildsensor aufgenommenen Bild unter Beibehaltung der Orientierung des aufgenommenen Bildes und unter Beibehaltung der Orientierung des Ausschnitts relativ zu der beobachteten Szene an das erste oder zweite Display übertragen und auf dem ersten oder zweiten Display dargestellt.

Gemäß einer bevorzugten symmetrischen Ausführungsform des digitalen optischen Geräts ist der Bildsensor an einem Teil des optischen Geräts befestigt, welches beim Verstellen des Knickwinkels der Gelenkeinrichtung im Wesentlichen keine Verkippung relativ zu der beobachteten Szene erfährt. Der Bildsensor kann z.B. an einem Teil der Knickbrücke befestigt sein, welcher seine Orientierung zur Horizontalen trotz Verstellung des Knickwinkels beibehält. Hierfür kann die Knickbrücke z.B. zwei miteinander gekoppelte Schwenkgelenke umfassen, wobei die beiden gekoppelten Schwenkgelenke gegenläufig symmetrisch schwenken und zwischen den beiden gegenläufig gekoppelten Schwenkgelenken ein nicht schwenkendes Brückenteil angeordnet ist. Die gegenläufige Kopplung kann z.B. mittels Zahnrädern oder einem Riemengetriebe verwirklicht sein.

Vorzugsweise wird in dem von dem Bildsensor aufgenommenen Bild ein um einen zweiten Kippwinkel relativ zu dem Bildsensor um eine Achse parallel zu der optischen Achse verkippter zweiter Begrenzungsrahmen definiert, der somit einen zweiten schräggestellten Ausschnitt des aus dem Bildsensor aufgenommenen Bildes begrenzt, wobei der zweite Kippwinkel des zweiten Begrenzungsrahmens in Abhängigkeit des aktuell eingestellten Knickwinkels der Gelenkeinrichtung entsprechend der mechanischen Verkippung des zweiten Displays definiert wird.

Vorzugsweise ist der zweite schräggestellte Ausschnitt kleiner als das von dem Bildsensor aufgenommene Bild, und der zweite Ausschnitt liegt vorzugsweise bei jedem einstellbaren Knickwinkel innerhalb der Sensorfläche des Bildsensors.

Bei diesem symmetrischen digitalen optischen Gerät wird der von dem verkippten ersten Begrenzungsrahmen begrenzte erste Ausschnitt aus dem von dem Bildsensor aufgenommenen Bild, insbesondere ohne Drehung des Bildes relativ zur beobachteten Szene bzw.

relativ zur Horizontalen, von dem ersten mechanisch verkippten Display dargestellt, und der von dem verkippten zweiten Begrenzungsrahmen begrenzte zweite Ausschnitt aus dem von dem Bildsensor aufgenommenen Bild wird, insbesondere ohne Drehung des Bildes relativ zur beobachteten Szene bzw. relativ zur Horizontalen, von dem zweiten mechanisch verkippten Display dargestellt.

Hierbei können in vorteilhafter Weise die Bildverarbeitung einfach gehalten und trotzdem beide Displays vollständig ausgenutzt werden.

Bei diesem symmetrischen digitalen optischen Gerät wird der Bildsensor bei dem Verstellen des Knickwinkels bei normaler Benutzung des optischen Geräts nicht verkippt und bleibt in transversaler Richtung horizontal ausgerichtet, wobei "normale Benutzung" bedeutet, dass die Verbindungslinie zwischen dem ersten und zweiten Okular im Wesentlichen horizontal gehalten wird. Im Falle eines rechteckigen Bildsensors bleibt dieser also trotz Verstellung des Knickwinkels aufrecht orientiert, so dass die obere und untere Kante des Bildsensors horizontal und die linke und rechte Kante des Bildsensors vertikal verlaufen und diese Ausrichtung trotz Verstellung des Knickwinkels unverändert bleibt. Mit anderen Worten bleibt bei der Benutzung des digitalen Fernglases die obere und untere Kante des Bildsensors parallel zu einer Verbindungslinie zwischen dem ersten und zweiten Okular. Mit anderen Worten werden der erste und/oder zweite Begrenzungsrahmen in dem von dem Bildsensor aufgenommenen Bild in Ansprechen auf die Verstellung des Knickwinkels gedreht.

In zweckmäßiger Weise werden für jeden aktuell eingestellten Knickwinkel der Gelenkeinrichtung der erste Kippwinkel des ersten Begrenzungsrahmens relativ zu dem Bildsensor und der zweite Kippwinkel des zweiten Begrenzungsrahmens relativ zu dem Bildsensor automatisch entgegengesetzt zueinander definiert.

Vorzugsweise ist das digitale optische Gerät ein digitales Fernglas, bei welchem die Gelenkeinrichtung ein einziges zentrales Schwenkgelenk oder gegenläufig gekoppelte Schwenkgelenke umfasst, um welches bzw. um welche das erste und das zweite Okular entgegengesetzt geschwenkt werden.

Hier ist der lediglich eine Bildsensor vorzugsweise derart an der Gelenkeinrichtung befestigt, dass der Bildsensor beim Verstellen des Knickwinkels der Gelenkeinrichtung während der normalen Benutzung des optischen Geräts horizontal ausgerichtet bleibt. Mit anderen Worten schwenken das erste und zweite Okular gegenläufig jeweils um den halben Knickwinkel relativ zu dem Bildsensor. Somit sind für jeden aktuell eingestellten Knickwinkel der Gelenkeinrichtung der erste Kippwinkel des ersten Begrenzungsrahmens relativ zu dem Bildsensor und der zweite Kippwinkel des zweiten Begrenzungsrahmens relativ zu dem Bildsensor entgegengesetzt gleich. Der erste Kippwinkel des ersten Begrenzungsrahmens relativ zu dem Bildsensor ist gleich dem Verkippungswinkel der mechanischen Verkippung des ersten Displays relativ zur Horizontalen und der zweite Kippwinkel des zweiten Begrenzungsrahmens relativ zu dem Bildsensor ist gleich dem Verkippungswinkel der mechanischen Verkippung des zweiten Displays relativ zur Horizontalen. Somit eignet sich die Erfindung besonders für diese Form von digitalen Ferngläsern.

Bevorzugt weist das digitale Fernglas einen Referenzknickwinkel auf, bei welchem bei normaler Benutzung das erste und zweite Display parallel zur Horizontalen verlaufen. Dieser Referenzknickwinkel kann auch als Nullstellung der Knickbrücke bezeichnet werden. Der Knickwinkel der Gelenkeinrichtung wird gemessen, und es wird für jeden aktuellen Knickwinkel ein Differenzknickwinkel zu dem Referenzknickwinkel bestimmt, so dass das erste und zweite Display jeweils entgegengesetzt um den halben Differenzknickwinkel gegenüber der Horizontalen mechanisch verkippt werden. Um dies erfindungsgemäß zu kompensieren, werden für jede Stellung der Knickbrücke der erste Kippwinkel des ersten Begrenzungsrahmens relativ zu dem Bildsensor als der halbe Differenzknickwinkel und der zweite Kippwinkel des zweiten Begrenzungsrahmens relativ zu dem Bildsensor als der halbe Differenzknickwinkel mit entgegengesetztem Drehsinn definiert.

Alternativ zu der Ausführungsform mit lediglich einem zentralen Schwenkgelenk oder zwei gekoppelten Schwenkgelenken kann die Gelenkeinrichtung auch zwei unabhängige dezentrale Schwenkgelenke aufweisen. Diese Art von digitalen Ferngläsern wird typischerweise als Kompaktfernglas bezeichnet. Hierbei ist also das erste Schwenkgelenk dezentral dem ersten Okular zugehörig, und das digitale Fernglas umfasst noch ein zweites dezentrales Schwenkgelenk für das zweite Okular sowie ein zwischen den beiden Schwenkgelenken angeordnetes zentrales starres Brückenteil, wobei das erste und zweite Okular unabhängig voneinander relativ zu dem zentralen starren Brückenteil geschwenkt werden können. Der lediglich eine Bildsensor ist hierbei an dem zentralen starren Brückenteil befestigt, derart, dass der Bildsensor bei entgegengesetzt gleicher Verstellung des Knickwinkels des ersten und zweiten Schwenkgelenks, d.h. bei normaler Benutzung, im Wesentlichen horizontal bleibt. Der erste Kippwinkel des ersten Begrenzungsrahmens relativ zu dem Bildsensor wird nun in Abhängigkeit von dem Knickwinkel des ersten Schwenkgelenks definiert, und der zweite Kippwinkel des zweiten Begrenzungsrahmens relativ zu dem Bildsensor wird unabhängig von dem ersten Kippwinkel und in Abhängigkeit von dem Knickwinkel des zweiten Schwenkgelenks definiert.

In vorteilhafter Weise kann hiermit die unabhängige Verkippung beider Okulare ohne unnötige Einbuße an nutzbarer Displayfläche an beiden Okularen kompensiert werden.

Die vorliegende Erfindung kann aber auch für asymmetrische digitale Ferngläser eingesetzt werden, bei welchen der Bildsensor gemeinsam mit einem der beiden Displays, im Folgenden beispielhaft mit dem zweiten Display, in einem gemeinsamen Gehäusetubus angeordnet ist. Bei der Verstellung des Knickwinkels der Gelenkeinrichtung wird der Gehäusetubus mit dem zweiten Display und dem Bildsensor mechanisch relativ zur Horizontalen um eine Achse parallel zu der optischen Achse verkippt, so dass durch die Verstellung des Knickwinkels der Gelenkeinrichtung das zweite Display und der Bildsensor gemeinsam um denselben Winkel um die Achse parallel zu der optischen Achse verkippt werden. Dies verursacht demnach eine unterschiedliche relative Verkippung des ersten und zweiten Displays relativ zu dem Bildsensor. Das zweite Display erfährt nämlich keine mechanische Verkippung relativ zu dem Bildsensor, wohingegen das erste Display um den vollen Knickwinkel relativ zu dem Bildsensor mechanisch verkippt wird.

Zur Kompensation der mechanischen Verkippung des ersten und zweiten Displays bei einem solchen asymmetrischen digitalen Fernglas werden folgende Ausführungsformen bereit gestellt.

Bei einer Ausführungsform wird in dem von dem Bildsensor aufgenommenen Bild zunächst ein horizontal ausgerichteter Zwischen-Begrenzungsrahmen definiert, der einen Zwischen-Ausschnitt aus dem von dem Bildsensor aufgenommenen Bild begrenzt, um trotz des verkippten Bildsensors zunächst einen horizontalen Zwischen-Ausschnitt zu bilden. Der Zwischenausschnitt ist vorzugsweise kleiner als das von dem Bildsensor aufgenommene Bild.

Anschließend wird der erste und/oder zweite Begrenzungsrahmen in dem horizontal ausgerichteten Zwischen-Begrenzungsrahmen bzw. Zwischen-Ausschnitt mit dem ersten und/oder zweiten Kippwinkel relativ zu dem Zwischen-Begrenzungsrahmen definiert, wobei der erste und/oder zweite Kippwinkel der mechanischen Verkippung des ersten und/oder zweiten Displays entspricht.

Bei einer weiteren Ausführungsform wird ein Zwischen-Begrenzungsrahmen für jeden Knickwinkel parallel zur Horizontalen definiert, so dass der von dem relativ zu dem Bildsensor verkippten Zwischen-Begrenzungsrahmen begrenzte Zwischen-Ausschnitt parallel zur Horizontalen liegt. Ferner wird in dem von dem Bildsensor aufgenommenen Bild ein relativ zu dem Bildsensor unverkippter dritter Begrenzungsrahmen definiert, der einen zu dem Bildsensor parallelen dritten Ausschnitt aus dem von dem Bildsensor aufgenommenen Bild begrenzt. Vorzugsweise weisen der erste und dritte Ausschnitt dieselbe Größe auf.

Ferner wird in dem parallel zur Horizontalen liegenden Zwischen-Ausschnitt ein relativ zu dem Zwischen-Ausschnitt verkippter erster Begrenzungsrahmen definiert, welcher den ersten Ausschnitt begrenzt und dessen Verkippung zur Horizontalen der mechanischen Verkippung des ersten Displays entspricht. Der erste Ausschnitt wird dann an das erste Display übertragen und ohne Drehung des Bildes relativ zu der beobachteten Szene bzw. relativ zur Horizontalen von dem ersten Display dargestellt, und der relativ zu dem Bildsensor unverkippte dritte Ausschnitt aus dem von dem Bildsensor aufgenommenen Bild wird an das zweite Display übertragen und ohne Drehung des Bildes relativ zu der beobachteten Szene bzw. relativ zur Horizontalen von dem zweiten Display dargestellt.

Bei einer weiteren Ausführungsform verlaufen das erste und zweite Display bei einem Referenzknickwinkel parallel zur Horizontalen, und es wird ein Differenzknickwinkel zu dem Referenzknickwinkel bestimmt. Es wird der erste Kippwinkel des ersten Begrenzungsrahmens genauso groß wie der Differenzknickwinkel definiert. Ferner wird in dem von dem Bildsensor aufgenommenen Bild ein relativ zu dem Bildsensor unverkippter dritter Begrenzungsrahmen definiert, der einen zu dem Bildsensor parallelen dritten Ausschnitt aus dem von dem Bildsensor aufgenommenen Bild begrenzt. Vorzugsweise weisen der erste und dritte Ausschnitt dieselbe Größe auf.

Anschließend wird der von dem verkippten ersten Begrenzungsrahmen begrenzte erste Ausschnitt aus dem von dem Bildsensor aufgenommenen Bild an das erste Display übertragen und ohne Drehung des Bildes relativ zu der beobachteten Szene bzw. relativ zur Horizontalen von dem ersten Display dargestellt, und der relativ zu dem Bildsensor unverkippte dritte Ausschnitt aus dem von dem Bildsensor aufgenommenen Bild wird an das zweite Display übertragen und ohne Drehung des Bildes relativ zu der beobachteten Szene bzw. relativ zur Horizontalen von dem zweiten Display dargestellt.

Vorzugsweise weist der Bildsensor eine rechteckige Form auf, und das erste und/oder zweite Display weist eine rechteckige, nicht-quadratische oder quadratische Form auf, und die Form des ersten und/oder zweiten Begrenzungsrahmens wird mit demselben Aspektverhältnis des ersten bzw. zweiten Displays definiert.

Gegebenenfalls beschränkt das erste und/oder zweite Okular durch mechanische Begrenzungen die für den Benutzer sichtbare Fläche des ersten bzw. zweiten Displays. Trotzdem wird die Größe der jeweiligen Displays so gewählt, dass die Displays zumindest in einer Dimension (x oder y) nicht wesentlich größer sind als die sichtbare Fläche des jeweiligen Displays, so dass die Fläche des jeweiligen Displays optimal ausgenutzt werden kann.

Bei einer rechteckigen, nicht-quadratischen oder quadratischen Form des ersten und/oder zweiten Displays und einer runden sichtbaren Fläche des ersten und/oder zweiten Displays wird das erste und/oder zweite Display so ausgewählt, dass der Durchmesser der runden sichtbaren Fläche zumindest in einer Dimension (x oder y) das jeweilige Display vollständig abdeckt.

Wenn das erste und/oder zweite Okular durch mechanische Begrenzungen die für den Benutzer sichtbare Fläche des ersten bzw. zweiten Displays beschränkt, werden vorzugsweise im Wesentlichen lediglich Pixel des ersten und/oder zweiten Displays mit Bilddaten des Bildsensors angesteuert, welche innerhalb der sichtbaren Fläche des ersten bzw. zweiten Displays liegen. Pixel, die außerhalb der sichtbaren Fläche liegen, bleiben dunkel, wodurch je nach Displaytechnologie Energie eingespart werden kann.

Wenn die sichtbare Fläche des ersten und/oder zweiten Displays rund ist, werden demnach lediglich Pixel in der runden sichtbaren Fläche des ersten bzw. zweiten Displays mit Bilddaten des Bildsensors angesteuert.

Gemäß einer weiteren Ausführungsform der Erfindung weisen das erste und/oder zweite Display eine runde Form auf und die aktive Displayfläche entspricht im Wesentlichen der Größe der von dem Benutzer sichtbaren Fläche.

Vorzugsweise weist das digitale optische Gerät einen ersten und/oder zweiten Knickbrückensensor auf, mittels welchem der Knickwinkel der Gelenkeinrichtung bzw. des ersten und/oder zweiten Schwenkgelenks gemessen wird. In Ansprechen auf den oder die gemessenen Knickwinkel können der erste und/oder zweite Kippwinkel des ersten Begrenzungsrahmens relativ zu dem Bildsensor und/oder der zweite Kippwinkel des zweiten Begrenzungsrahmens relativ zu dem Bildsensor, z.B. von einem Mikrocontroller, FPGA, DSP oder ASIC, automatisch definiert werden. Der erste und/oder zweite Knickbrückensensor ist z.B. als Magnetsensor oder als Dehnungsmessstreifen ausgebildet. Derartige Knickbrückensensoren sind z.B. in der DE 10 2012 200 514 A1, DE 10 2012 000 861 A1 und der WO 2013/104654 A1 beschrieben, deren Offenbarung bezüglich des Knickbrückensensors hiermit durch Referenz inkorporiert wird.

Das optische Gerät kann aber auch eine Einstelleinrichtung aufweisen, mittels welcher der Benutzer den ersten Kippwinkel des ersten Begrenzungsrahmens relativ zu dem Bildsensor und/oder den zweiten Kippwinkel des zweiten Begrenzungsrahmens relativ zu dem Bildsensor manuell definieren kann.

Gemäß einer besonderen Ausführungsform wird das mit dem Bildsensor aufgenommene Bild längerfristig gespeichert. Dies kann auf einem internen oder externen Datenspeicher erfolgen. Das aufgenommene Bild, wobei "Bild" hier auch ein Video, also eine Abfolge von Bildern umfassen kann, wird zu einem späteren Zeitpunkt zur Betrachtung auf dem ersten und/oder zweiten Display durch das erste und/oder zweite Okular wieder geladen. Bei einer solchen zeitversetzten Betrachtung des Bildes wird die Definition des ersten Kippwinkels des ersten Begrenzungsrahmens relativ zu dem Bildsensor und/oder die Definition des zweiten Kippwinkels des zweiten Begrenzungsrahmens relativ zu dem Bildsensor erst zum Zeitpunkt der späteren Betrachtung in Abhängigkeit des bei der späteren Betrachtung eingestellten Knickwinkels der Gelenkeinrichtung vorgenommen.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

Kurzbeschreibung der Figuren

Es zeigen:

Fig. 1 Eine schematische Draufsicht auf ein digitales binokulares Fernglas,

Fig. 2 eine schematische Darstellung eines digitalen binokularen Fernglas mit zentraler Knickbrücke und zentralem Bildsensor,

Fig. 3 eine schematische Ansicht des digitalen binokularen Fernglases aus Fig. 2,

Fig. 4 eine schematische Darstellung der Abbildung mit dem Fernglas aus Fig. 2, wenn die Knickbrücke in der Referenzposition steht,

Fig. 5 wie Fig. 4, aber mit verkleinertem Knickwinkel,

Fig. 6 eine schematische Ansicht eines Kompaktfernglases in der Referenzposition der Knickbrücke,

Fig. 7 wie Fig. 6, aber mit beidseits verkleinertem Knickwinkel,

Fig. 8 eine schematische Darstellung einer weiteren Ausführungsform eines digitalen binokularen Fernglases, bei welchem der Bildsensor in einem der beiden Tuben angeordnet ist,

Fig. 9 eine schematische Darstellung einer ersten Variante der Abbildung mit dem digitalen binokularen Fernglas aus Fig. 8,

Fig. 10 eine schematische Darstellung einer zweiten Variante der Abbildung mit dem digitalen binokularen Fernglas aus Fig. 8,

Fig. 11 eine schematische Darstellung einer dritten Variante der Abbildung mit dem digitalen binokularen Fernglas aus Fig. 8,

Fig. 12 eine schematische Darstellung eines digitalen Kompaktfernglases, bei welchem der Bildsensor in einem der beiden Tuben angeordnet ist, mit einer ersten Variante der Abbildung,

Fig. 13 eine schematische Darstellung einer zweiten Variante der Abbildung mit dem digitalen Kompaktfernglas aus Fig. 12,

Fig. 14 eine schematische Darstellung einer dritten Variante der Abbildung mit dem digitalen Kompaktfernglas aus Fig. 12,

Fig. 15 eine schematische Darstellung einer Knickbrücke mit Zahnradgetriebe,

Fig. 16 eine schematische Darstellung einer Knickbrücke mit Riemengetriebe,

Fig. 17 eine Variante der Definition des Begrenzungsrahmens.

Detaillierte Beschreibung der Erfindung

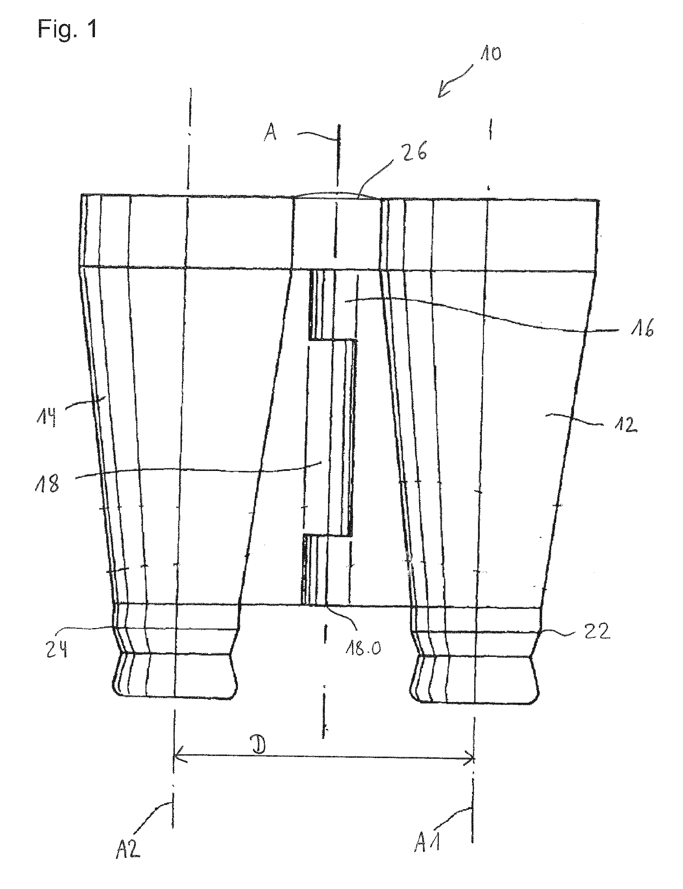

Bezug nehmend auf Fig. 1 weist das digitale Fernglas 10 eine erste und zweite Gehäusehälfte in Form eines rechten bzw. linken Tubus 12, 14 auf. Die beiden Tuben 12, 14 sind mittels einer Knickbrücke 16 verbunden, welche eine Gelenkeinrichtung 18 mit in diesem Beispiel einem zentralen Schwenkgelenk 18.0 aufweist, um deren Achse die beiden Tuben 12, 14 symmetrisch zueinander geschwenkt werden können. Der rechte und linke Tubus 12, 14 weisen ein rechtes bzw. linkes Okular 22, 24 auf, deren optische Achsen A1 und A2 den Okularabstand D definieren. Um den Okularabstand D an die Augenweite des Benutzers anzupassen, werden die beiden Tuben 12, 14 aufeinander zu geschwenkt, so dass der Knickwinkel kleiner wird.

Das in Fig. 1 dargestellte digitale binokulare Fernglas 10 weist ein einziges zentral angeordnetes Objektiv 26 auf, welches derart an der Knickbrücke 16 befestigt ist, dass es beim Schwenken der beiden Tuben 12, 14 seine absolute Orientierung zur Horizontalen beibehält, nämlich wenn beide Tuben 12, 14 vom Benutzer gleichartig heruntergeschwenkt werden, d.h. wenn wie bei einer normalen Benutzung üblich, die Verbindungslinie zwischen den beiden optischen Achsen A1 und A2 horizontal gehalten wird.

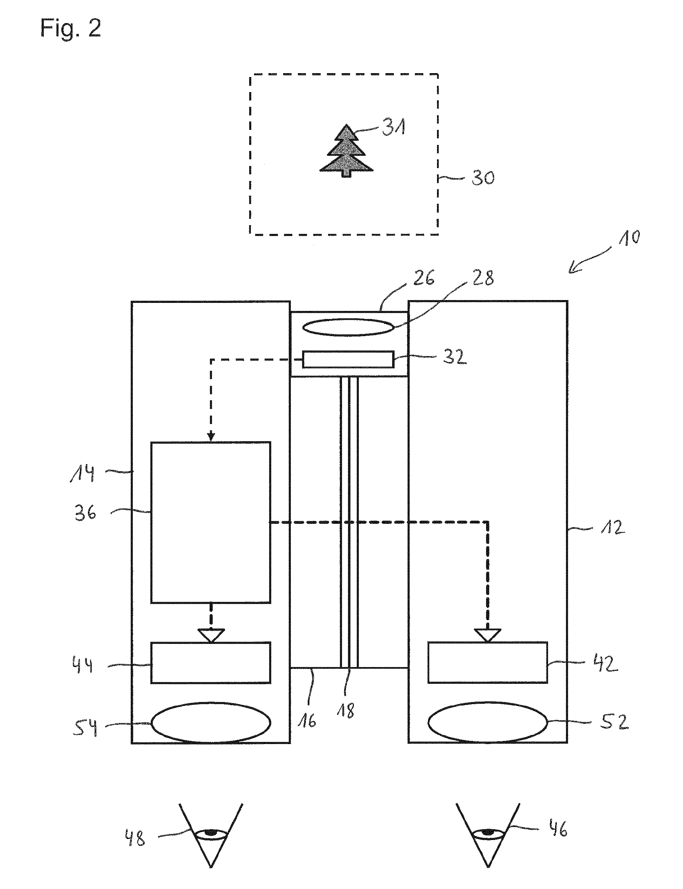

Bezug nehmend auf Fig. 2 weist das zentrale Objektiv 26 eine Objektivlinsenanordnung 28 auf, von welcher der Einfachheit halber in der Zeichnung lediglich eine Linse symbolisiert ist. Die Linsenanordnung 28 bildet eine beobachtete Szene 30 auf den zentralen Bildsensor 32 ab. Der Bildsensor 32 ist in diesem Beispiel ein rechteckiger Bildsensor, welcher etwas breiter als hoch ist (typische Bildsensoren besitzen ein Aspektverhältnis (Breite zu Höhe) von z.B. 3:2, 4:3 oder 16:9) und somit ein rechteckiges Bild der Szene 30 aufnimmt. Das von dem Bildsensor 32 aufgenommene Bild wird von einer Steuer- und Bildverarbeitungseinrichtung 36 in Form einer digitalen Verarbeitungseinheit, z.B. einem Mikrocontroller, FPGA, DSP oder ASIC weiterverarbeitet und auf dem rechten ersten und dem linken zweiten Display 42, 44 dargestellt. Der Benutzer betrachtet mit seinem rechten und linken Auge 46, 48 durch die Okularlinsenanordnungen 52, 54 - von welchen der Einfachheit halber in der Zeichnung lediglich jeweils eine Linse symbolisiert ist - das auf dem rechten bzw. linken Display 42, 44 dargestellte digital erzeugte von dem Bildsensor 32 stammende und mittels der Steuer- und Bildverarbeitungseinrichtung 36 verarbeitete Bild.

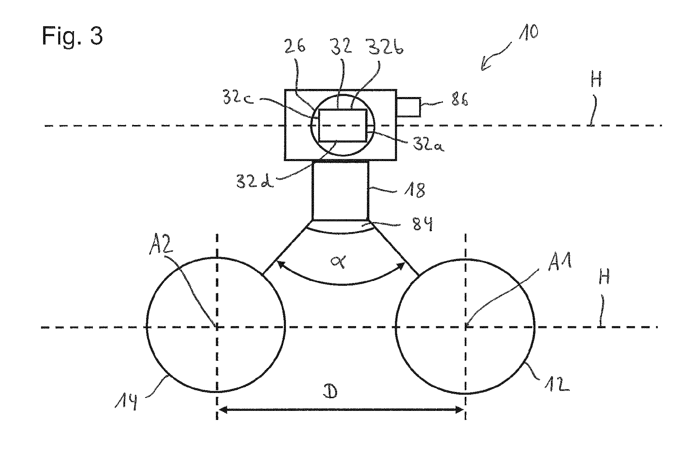

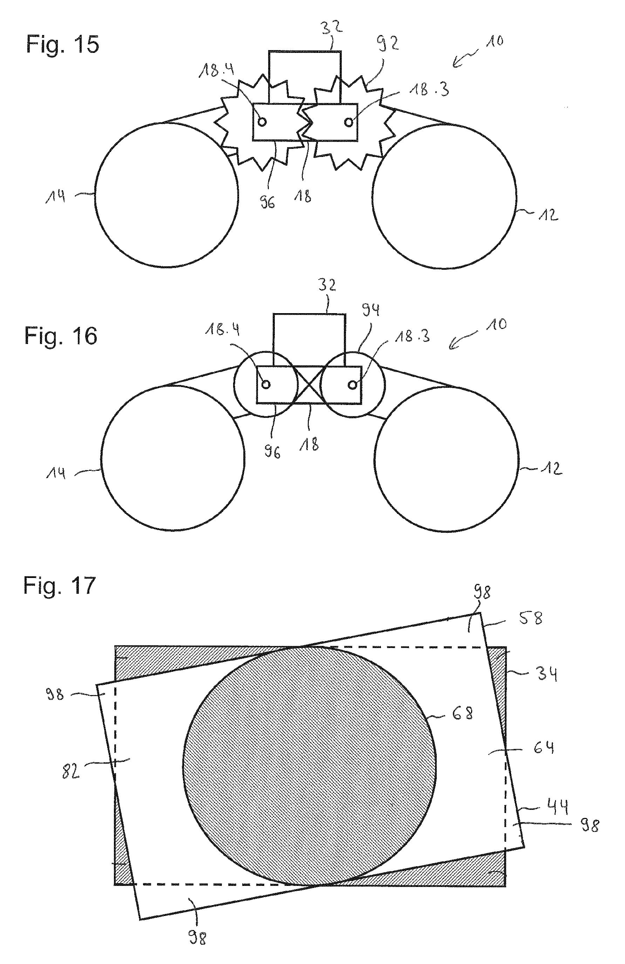

Bezug nehmend auf Fig. 3 bleibt die Ausrichtung des zentral angeordneten Objektivs 26 mit zentral angeordnetem Bildsensor 32 parallel zur Horizontalen H ausgerichtet, auch dann, wenn der Knickwinkel α des digitalen binokularen Fernglases 10 durch Schwenkung der beiden Tuben 12, 14 um die Gelenkeinrichtung 18 verstellt wird, um den Okularabstand D der beiden optischen Achsen A1, A2 der beiden Okulare 22, 24 zu verstellen (vgl. Fig. 15, 16).

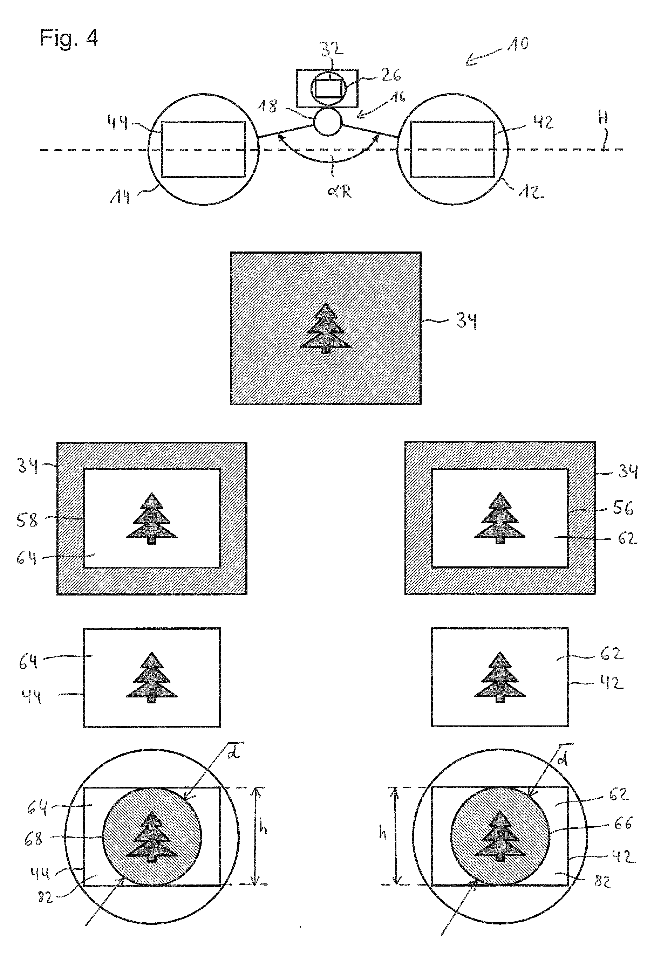

Fig. 4 zeigt die Referenzposition des digitalen binokularen Fernglases 10. In der Referenzposition weist die Knickbrücke 16 einen Referenzknickwinkel αR auf, welcher typischerweise, aber nicht notwendigerweise, einen oberen Anschlag für die Schwenkbewegung der beiden Tuben 12, 14 bildet. Wenn sich die Knickbrücke 16 in der dargestellten Referenzposition befindet, sind das rechteckige rechte Display 42 und das rechteckige linke Display 44 parallel zur Horizontalen H ausgerichtet. Der Bildsensor 32 nimmt nun ein Bild 34 auf. In der dargestellten Referenzposition der Knickbrücke 16, werden ein rechter erster und linker zweiter Begrenzungsrahmen 56, 58, innerhalb des vom Bildsensor 32 aufgenommenen Bildes 34 definiert. Der rechte und linke Begrenzungsrahmen 56, 58 begrenzen somit einen rechten bzw. linken Bildausschnitt 62, 64, wobei in der dargestellten Referenzposition der Knickbrücke 16 die beiden Begrenzungsrahmen 56, 58 ausnahmsweise parallel zur Horizontalen H verlaufen. Die Begrenzungsrahmen 56, 58 bzw. die Bildausschnitte 62, 64 werden so gewählt, dass mit ihnen das rechte bzw. linke Display 42, 44 vollständig ausgefüllt und ausgenutzt werden. Es werden demnach ein rechter und linker Ausschnitt 62, 64 aus dem aufgenommenen Bild 34 für die Darstellung im rechten bzw. linken Display 42, 44 aufgenommen, wobei in diesem Beispiel die beiden Bildausschnitte 62, 64 kleiner sind als der Bildsensor 32. In Fig. 4 sind die Begrenzungsrahmen 56, 58 und die Ausschnitte 62, 64 aus dem aufgenommenen Bild 34 also ausnahmsweise noch unverkippt, da sich die Knickbrücke 16 in der Referenzposition befindet, in welcher die Displays 42, 44 parallel zur Horizontalen H ausgerichtet sind, d.h. mechanisch noch nicht verkippt sind.

Durch eine mechanische Beschränkung sieht der Benutzer im rechten und linken Okular 22, 24 jeweils ein kreisrundes Sehfeld 66, 68, wobei der Durchmesser d der Sehfelder 66, 68 im Wesentlichen der Höhe h des rechten und linken Displays 42, 44 entspricht, so dass die Fläche der Displays 42, 44 optimal ausgenutzt wird.

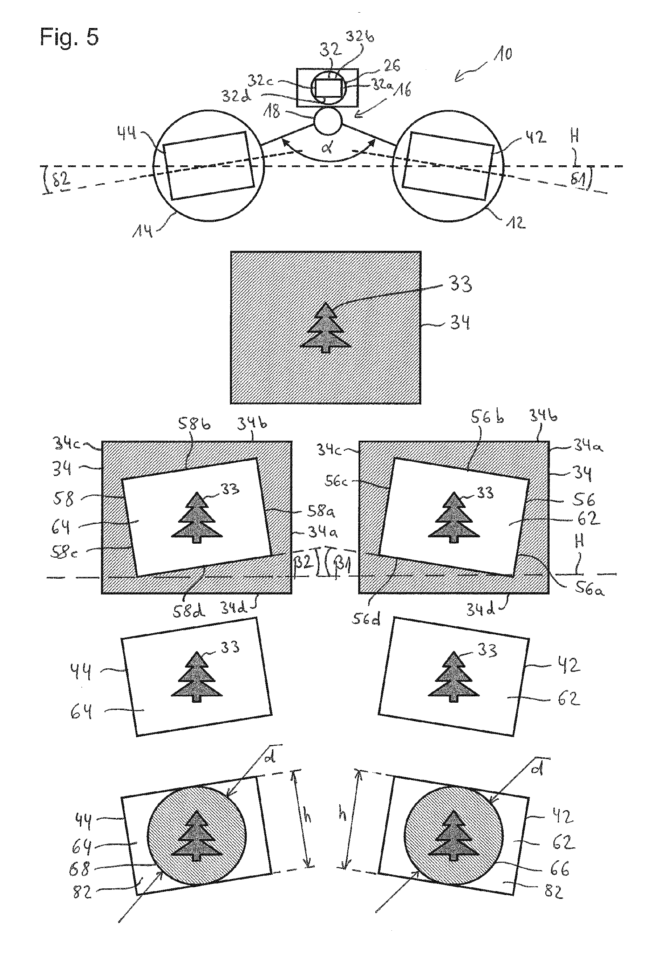

Fig. 5 zeigt das digitale binokulare Fernglas 10 nun in einer Knickstellung der Knickbrücke 16 außerhalb der Referenzposition, so dass der rechte und linke Tubus 12, 14 aufeinander zu geschwenkt sind und somit der Okularabstand kleiner ist, als in der Referenzposition in Fig. 4. Hierbei weist die Knickbrücke 16 einen Knickwinkel α auf, welcher kleiner als der Referenzknickwinkel αR ist. Der Referenzknickwinkel αR beträgt dabei nicht notwendigerweise 180°, sondern der Referenzknickwinkel αR ist ohne Beschränkung der Allgemeinheit typischerweise etwas kleiner als 180°.

Durch das Verschwenken der beiden Tuben 12, 14 entsteht eine Verkippung des rechten Displays 42 um einen Winkel δ1 und eine Verkippung des linken Displays 44 um einen Winkel δ2. In diesem Beispiel ist die Verkippung des linken und rechten Displays 42, 44 symmetrisch, so dass die Winkel δ1 und δ2 entgegengesetzt gleich sind. Bei diesem symmetrischen Aufbau der Gelenkeinrichtung 18 gilt daher:

$$\delta2 = -\delta1 = (\alpha R - \alpha)/2.$$

Bei dieser Ausführungsform ist das Objektiv 26 mit dem Bildsensor 32 derart an der Knickbrücke 16 angebracht, dass seine Orientierung zur Horizontalen H von der Schwenkbewegung der beiden Tuben 12, 14 unbeeinflusst bleibt, d.h. dass das Objektiv 26, genauer der rechteckige Bildsensor 32, für jeden beliebigen Knickwinkel $\alpha$ parallel zur Horizontalen H ausgerichtet bleibt. Somit ist die Orientierung des von dem Bildsensor 32 aufgenommenen Bildes 34 relativ zur Horizontalen H unabhängig von der aktuellen Einstellung des Knickwinkels $\alpha$. In dem aufgenommenen Bild 34 werden nun für das rechte Display 42 ein in Uhrzeigersinn um den Winkel $\beta1$ verkippter rechter Begrenzungsrahmen 56 und ein entgegen dem Uhrzeigersinn um den Winkel $\beta2$ verkippter linker Begrenzungsrahmen 58 in dem aufgenommenen Bild 34 definiert. Demnach verlaufen die Kanten 56a-d, 58a-d des jeweiligen Begrenzungsrahmens 56, 58 schräg zu den Kanten 32a-d des Bildsensors 32 und damit schräg zu den Kanten 34a-d des von dem Bildsensor 32 aufgenommenen Bildes 34. In diesem Beispiel sind der rechte und linke Kippwinkel $\beta1$, $\beta2$ entgegengesetzt gleich, so dass die Begrenzungsrahmen 56, 58 jeweils um den Winkel $\beta1$, $\beta2$ entgegengesetzt verkippte Bildausschnitte 62, 64 begrenzen. Anzumerken ist dabei, dass lediglich die Begrenzungsrahmen 56, 58 bzw. die Bildausschnitte 62, 64 gegenüber dem Bildsensor 32 und gegenüber der Horizontalen H verkippt sind, nicht jedoch das dargestellte Bild 34 gedreht wird. Die Orientierung des dargestellten Bildes 34 relativ zur beobachteten Szene bzw. relativ zur Horizontalen bleibt bei diesen Prozessschritten bis einschließlich zur Darstellung auf dem zugehörigen Display unverändert, wenn der Benutzer das digitale binokulare Fernglas 10 gerade hält.

Die jeweils entgegengesetzt um die Winkel $\beta1$, $\beta2$ verkippten Bildausschnitte 62, 64 sind gleichermaßen verkippt wie die Displays 42, 44, d.h. es gilt $\beta1 = \delta1$ und $\beta2 = \delta2$, so dass die Bildausschnitte 62, 64 unter Beibehaltung ihrer Orientierung relativ zum Bildsensor 32 und relativ zur Horizontalen H, also aufrecht und ohne Drehung des Bildes und unter vollständiger Ausnutzung der Displayfläche auf dem rechten und linken Display 42, 44 dargestellt werden. Dies ist auch daran zu erkennen, dass das Bild 33 des als Baum symbolisierten Objekts 31 in dem aufgenommenen Bild 34 während der Bildverarbeitung aufrecht stehen bleibt und relativ zur beobachteten Szene bzw. relativ zur Horizontalen nicht gedreht wird.

Somit steht das von den beiden Displays 42, 44 dargestellte Bild unabhängig vom aktuell eingestellten Knickwinkel $\alpha$, d.h. für jeden beliebigen Knickwinkel $\alpha$, aufrecht, und die Fläche der beiden Displays 42, 44 kann trotzdem vollständig ausgeschöpft werden. Das Bild selbst wird dabei relativ zum Bildsensor 32 und relativ zur beobachteten Szene bzw. relativ zur Horizontalen H nicht gedreht, sondern wird, wie vorstehend erläutert, lediglich mit einem schräggestellten Begrenzungsrahmen 56, 58 ausgeschnitten.

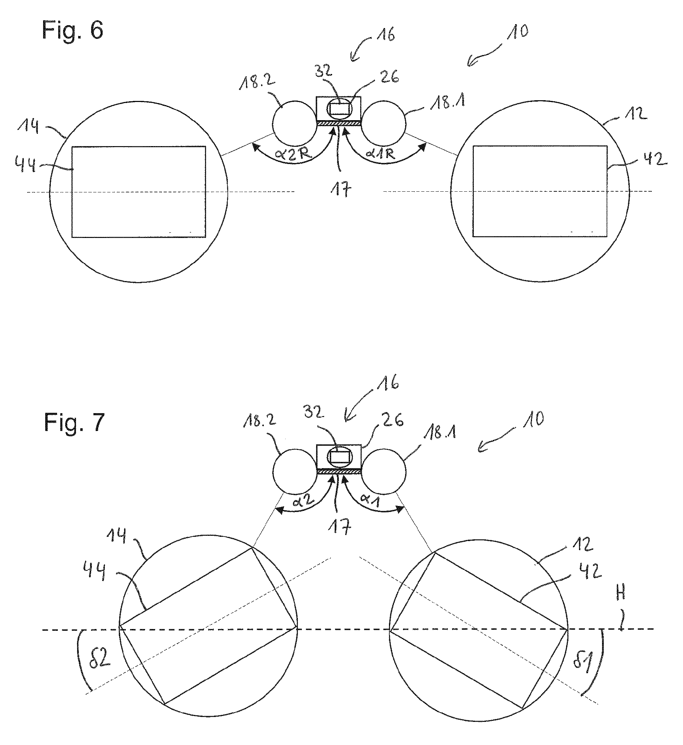

Die Fig. 6 und 7 zeigen ein digitales binokulares Kompaktfernglas 10, bei welchem die Knickbrücke 16 eine Gelenkeinrichtung mit einem unabhängigen rechten und linken Schwenkgelenk 18.1, 18.2 aufweist. An dem rechten und linken Schwenkgelenk 18.1, 18.2 ist ein zentrales starres Brückenteil 17 aufgehängt, an welchem das Objektiv 26 mit dem Bildsensor 32 angebracht ist. Fig. 6 zeigt das Kompaktfernglas 10 in der Referenzposition, in welcher das rechte und linke Display 42, 44 parallel zur Horizontalen H verlaufen. In der Referenzposition weisen das rechte und linke Schwenkgelenk 18.1, 18.2 einen rechten Referenzwinkel $\alpha1R$ und einen linken Referenzwinkel $\alpha2R$ auf.

Bezug nehmend auf Fig. 7 ist das digitale binokulare Kompaktfernglas 10 mit relativ zur Referenzposition verstellten Knickwinkeln $\alpha1$ und $\alpha2$ dargestellt. Es ist ersichtlich, dass bei dieser Ausführungsform die beiden Tuben 12, 14 unabhängig voneinander geschwenkt werden können, so dass der mechanische Verkippungswinkel $\delta1$ und $\delta2$ des rechten und linken Displays 42, 44 unterschiedlich sein können. Für die mechanischen Verkippungswinkel $\delta1$ und $\delta2$ der beiden Displays 42, 44 gelten in diesem Beispiel folgende Beziehungen:

$$\delta1 = \alpha1R - \alpha1$$

$$\delta2 = \alpha2R - \alpha2$$

wenn das starre Brückenteil 17 horizontal gehalten wird. Die Definition der verkippten Begrenzungsrahmen 56, 58 bzw. der verkippten Bildausschnitte 62, 64 erfolgt wie bei dem anhand der Fig. 5 beschriebenen Beispiel, mit dem Unterschied, dass nun unterschiedliche Kippwinkel $\beta1 = \delta1$ und $\beta2 = \delta2$ definiert werden können.

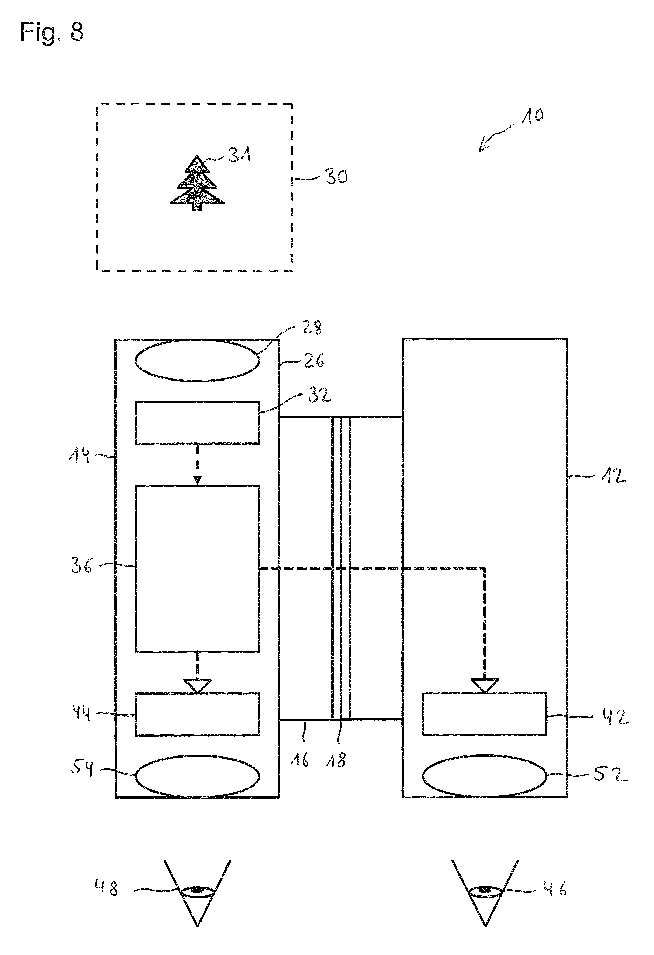

Bezug nehmend auf Fig. 8 kann bei einer weiteren Ausführungsform des digitalen binokularen Fernglases 10 das Objektiv 26 mit dem Bildsensor 32 anstatt drehfest zentral an der Knickbrücke 16 auch in einem der beiden Tuben 12, 14 angeordnet sein. Im vorliegenden Beispiel ist das Objektiv 32 mit dem Bildsensor 36 in dem linken zweiten Tubus 14 angeordnet. Dies führt dazu, dass der Bildsensor 32 entsprechend dem linken Display 44 verkippt wird. Somit findet zwar keine relative Verkippung zwischen dem Bildsensor 32 und dem linken Display 44, aber noch immer eine relative Verkippung zwischen dem rechten Display 42 und dem Bildsensor 32 statt. Dies wird durch eine entsprechende Anpassung der Bildverarbeitung und Darstellung auf den beiden Displays 42, 44 wie folgt gelöst.

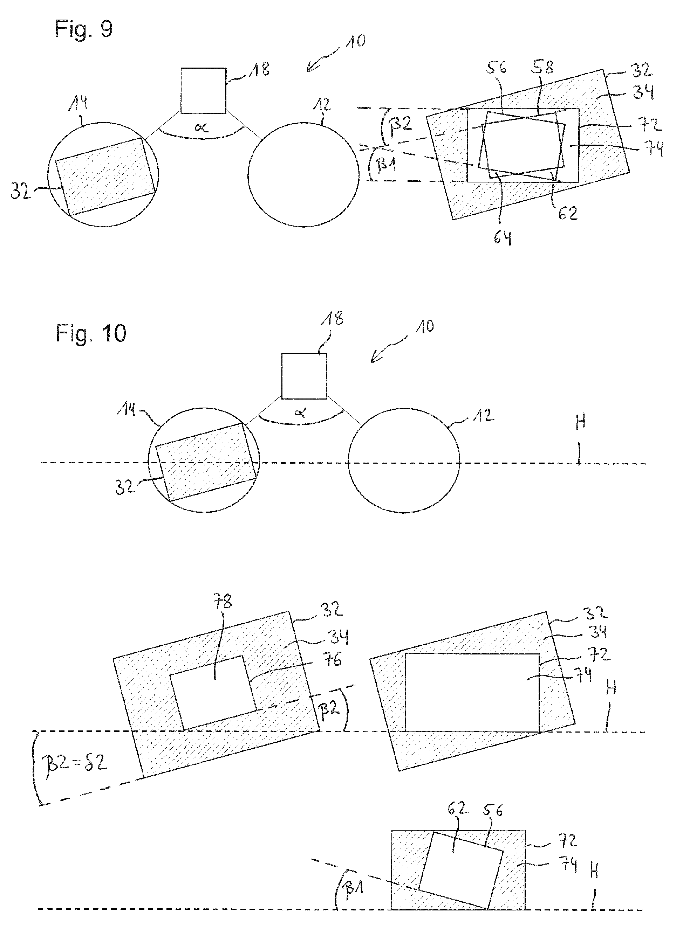

Bezug nehmend auf Fig. 9 wird bei einer Variante zunächst ein horizontaler Zwischen-Begrenzungsrahmen 72 in dem mit dem Bildsensor 32 aufgenommenen Bild 34 definiert. Der horizontale Zwischen-Begrenzungsrahmen 72 begrenzt einen parallel zur Horizontalen H ausgerichteten Zwischen-Ausschnitt 74 aus dem aufgenommenen Bild 34. Anschließend wird für das rechte und linke relativ zu dem horizontalen Zwischen-Begrenzungsrahmen 72 verkippte Display 42, 44 wie anhand der Fig. 4 und 5 beschrieben vorgegangen, wobei der rechte und linke verkippte Begrenzungsrahmen 56, 58 in dem horizontal ausgerichteten Zwischen-Ausschnitt 74 des aufgenommenen Bildes definiert wird. Es wird also wie bei der in Fig. 5 beschriebenen Ausführungsform ein um den Winkel $\beta 1$ im Uhrzeigersinn verkippter Begrenzungsrahmen 56 und ein um den Winkel $\beta 2$ entgegen dem Uhrzeigersinn verkippter Begrenzungsrahmen 58 relativ zu dem Zwischen-Ausschnitt 74 und innerhalb des Zwischen-Ausschnitts 74 definiert. Der im Uhrzeigersinn verkippte Bildausschnitt 62 wird auf dem rechten Display 42 und der entgegen dem Uhrzeigersinn verkippte Bildausschnitt 64 wird auf dem linken Display 44 dargestellt.

Bezug nehmend auf Fig. 10 wird gemäß einer weiteren Variante zunächst ein parallel zur Horizontalen H verlaufender Zwischen-Begrenzungsrahmen 72 für das rechte Display 42 definiert, um einen horizontal verlaufenden Zwischen-Ausschnitt 74 zu begrenzen. Zur Darstellung auf dem rechten Display 42 wird entsprechend der anhand von Fig. 9 beschriebenen Variante vorgegangen, d.h. es wird innerhalb des horizontalen Zwischen-Ausschnitts 74 der im Uhrzeigersinn um einen Winkel $\beta 1$ relativ zu dem horizontal verlaufenden Zwischen-Ausschnitt 74 gekippte rechte Begrenzungsrahmen 56 definiert. Der von dem verkippten rechten Begrenzungsrahmen 56 begrenzte verkippte Bildausschnitt 62 wird anschließend auf dem gleichermaßen verkippten rechten Display 42 dargestellt. Für das linke Display 44 wird in dem Bild 34 ein dritter Begrenzungsrahmen 76 definiert, welcher parallel zu dem mit dem linken Tubus 14 verkippten Bildsensor 32 verläuft. Der dritte Begrenzungsrahmen 76 begrenzt somit einen dritten Bildausschnitt 78, welcher parallel zu dem Bildsensor 32 und dem aufgenommenen Bild 34 verläuft. Der dritte Bildausschnitt 78 weist dieselbe Größe auf wie der verkippte rechte Bildausschnitt 62. Demnach wird für das linke Display 44 das Bild lediglich parallel zu dem Bildsensor 32 beschnitten, um die gleiche Bildgröße wie für das rechte Display 42 zu erhalten. Die Verkippung des dritten Begrenzungsrahmens 76 relativ zur Horizontalen H entspricht der Verkippung des Bildsensors 32 relativ zur Horizontalen H.

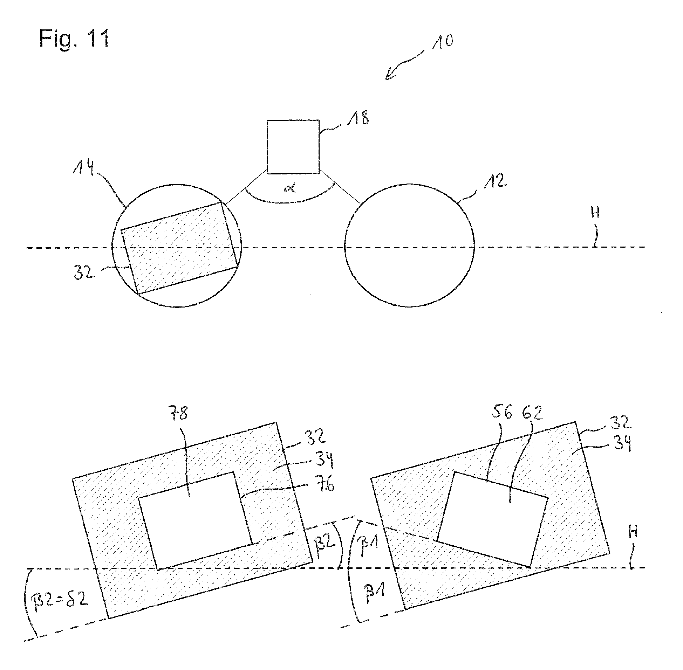

Fig. 11 zeigt eine weitere Variante für die Bildverarbeitung und -darstellung, wenn der Bildsensor 32 mit einem der beiden Tuben, hier dem linken Tubus 14 mechanisch verkippt wird. Hierbei wird, wie anhand der in Fig. 10 beschriebenen Variante, für die Darstellung auf dem linken Display 44 ein dritter Begrenzungsrahmen 76 definiert, welcher parallel zu dem mechanisch verkippten Bildsensor 32 und somit um einen Winkel $\beta 2$ relativ zur Horizontalen H verkippt ist. Mit anderen Worten verlaufen der dritte Begrenzungsrahmen 76 bzw. der von dem Begrenzungsrahmen 76 begrenzte dritte Bildausschnitt 78 parallel zu dem aufgenommenen Bild 34.

Für die Darstellung auf dem rechten Display 42 wird nun unmittelbar in dem vom Bildsensor 32 aufgenommenen Bild 34 der verkippte rechte Begrenzungsrahmen 56 definiert. Der rechte Begrenzungsrahmen 56 wird mit dem Kippwinkel $\beta 1$ relativ zur Horizontalen H bzw. dem Kippwinkel $2 \times \beta 1$ relativ zu dem Bildsensor 32 bzw. dem aufgenommenen Bild 34 definiert. Hierbei entspricht der Winkel $2 \times \beta 1$ dem relativen Knickwinkel $\alpha R - \alpha$. Der rechte Begrenzungsrahmen 56 zum Ausschneiden des rechten Bildausschnitts 62, welcher auf dem rechten Display 42 dargestellt wird, wird also unmittelbar mit dem Relativwinkel zwischen dem rechten und linken Display 42, 44 ausgeschnitten. Das Bild für das linke Display 44 - also das Display in dem Tubus mit dem Bildsensor 32 - wird parallel zu dem Bildsensor 32 beschnitten, um die gleiche Bildgröße wie für das rechte Display 42 zu erhalten.

Wieder Bezug nehmend auf Fig. 4 und 5 können anstatt der rechteckigen, nicht quadratischen Displays 42, 44 auch quadratische Displays 42, 44 verwendet werden. Dies hat den Vorteil, dass bei einer kreisrunden mechanischen Beschränkung 68 durch das Okular weniger Einbuße an Displayfläche, d.h. weniger Verschnitt entsteht. Der Bereich 82 der Displayfläche, welcher außerhalb des runden optisch beschränkten Sehfeldausschnittes 68 liegt, wird vorzugsweise nicht mit Bilddaten angesteuert. Mit anderen Worten werden vorzugsweise nur innerhalb des runden Sehfeldausschnittes 68 liegende sichtbare Displaypixel von der Software der Steuer- und Bildverarbeitungseinrichtung 36 angesteuert. Alternativ können auch runde Displays 42, 44 verwendet werden.

Der Knickwinkel $\alpha$ kann automatisch mittels eines Knickbrückensensors 84 detektiert werden, so dass die Kippwinkel $\beta 1$, $\beta 2$ der Begrenzungsrahmen 56, 58 automatisch von der Steuer- und Bildverarbeitungseinrichtung 36 in Ansprechen auf den gemessenen Knickwinkel definiert werden. Alternativ kann das digitale binokulare Fernglas 10 eine Einstelleinrichtung 86, z.B. einen Drehknopf aufweisen, mittels welchem der oder die Kippwinkel $\beta 1$ und $\beta 2$ der Begrenzungsrahmen eingestellt werden. Eine solche Einstelleinrichtung 86 ist beispielsweise in Fig. 3 dargestellt.

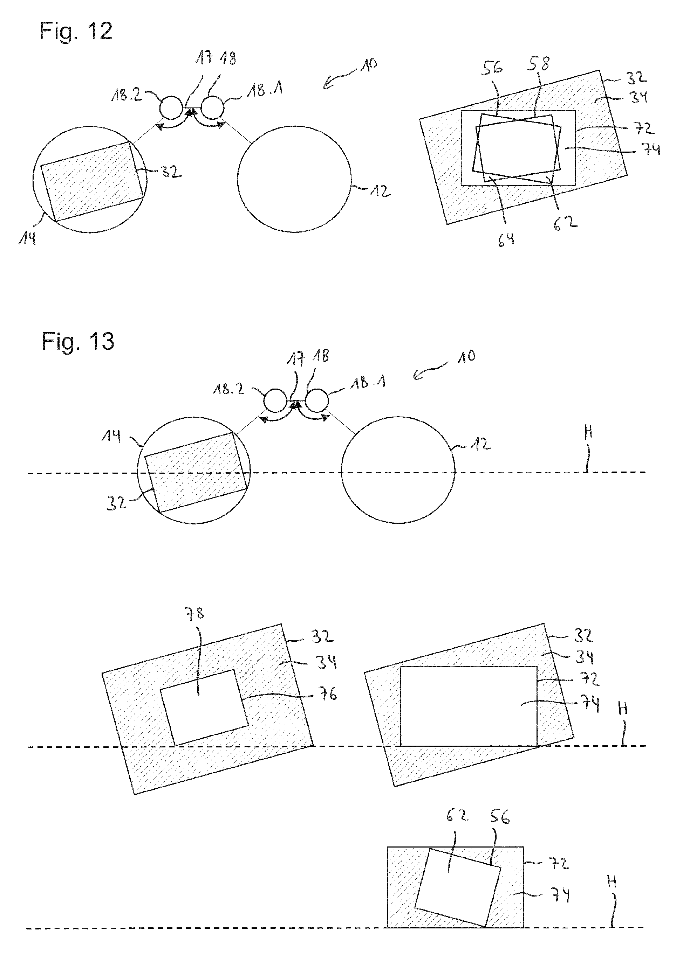

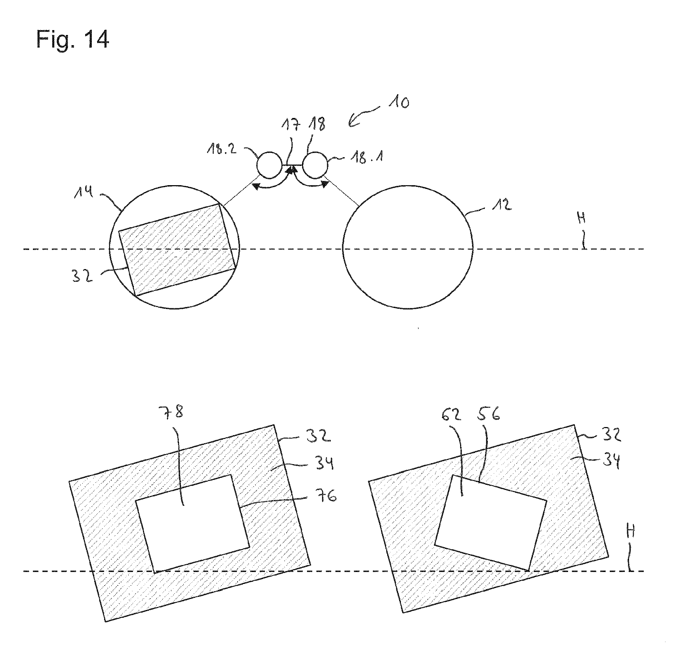

Bezug nehmend auf die Fig. 12 bis 14 ist ein digitales binokulares Kompaktfernglas 10 dargestellt, bei welchem die Knickbrücke 16 eine Gelenkeinrichtung 18 mit einem unabhängigen rechten und linken Schwenkgelenk 18.1, 18.2 aufweist. Diesbezüglich kann auf das in den Fig. 6 und 7 dargestellte Ausführungsbeispiel verwiesen werden. Das Objektiv 26 ist entsprechend den in den Fig. 9 bis 11 dargestellten Ausführungsbeispielen jedoch in einem der beiden Tuben 12, 14 angeordnet, im vorliegenden Beispiel in dem linken zweiten Tubus 14. Die Definition des bzw. der Begrenzungsrahmen 56, 58, 72, 76 erfolgt entsprechend wie anhand von Fig. 9 bis 11 beschrieben, wobei bei dem Kompaktfernglas mit zwei unabhängigen Schwenkgelenken 18.1, 18.2 die Summe des linken und rechten Knickwinkels $\alpha 1 + \alpha 2$ dem Knickwinkel $\alpha$ bei dem Fernglas mit dem einen Schwenkgelenk 18.0 entspricht.

Fig. 15 zeigt schematisch eine Knickbrücke mit einer Gelenkeinrichtung 18, welche zwei miteinander gekoppelte Schwenkgelenke 18.3, 18.4 umfasst. Die Kopplung der beiden Schwenkgelenke 18.3, 18.4 ist mittels eines Getriebes, z.B. eines Zahnradgetriebes 92 (Fig. 15) oder eines Riemengetriebes 94 (Fig. 16) verwirklicht. Die Kopplung ist derart ausgebildet, dass mittels des Getriebes 92, 94 ein gegenläufiges symmetrisches Schwenken der Schwenkgelenke 18.3, 18.4 relativ zu dem Brückenteil 96 erzwungen wird. Das Objektiv 26 und der Bildsensor 32 sind an dem Brückenteil 96 befestigt, damit die beiden Tuben 12, 14 bzw. die beiden Displays 42, 44 gegenläufig symmetrisch zu dem Objektiv 26 und zu dem Bildsensor 32 schwenken.

In den in Fig. 4 bis 14 dargestellten Ausführungsbeispielen sind die Begrenzungsrahmen 56, 58, 72, 76 jeweils kleiner als der Bildsensor 32. Mit anderen Worten wird der schräggestellte Begrenzungsrahmen vollständig innerhalb des Bildsensors 32 definiert und der schräggestellte Bildausschnitt liegt vollständig innerhalb des aufgenommenen Bildes 34. Demnach verbleibt bei diesen Ausführungsbeispielen ein ungenutzter Rand des von dem Bildsensor 32 aufgenommenen Bildes 34 um den Begrenzungsrahmen. Der Vorteil hieran ist, dass das bzw. die Displays 42, 44, die typischerweise eine geringere Auflösung als der Bildsensor 32 aufweisen, vollständig ausgenutzt werden können. Bezug nehmend auf Fig. 17 ist es jedoch auch möglich, den schräggestellten Begrenzungsrahmen, in Fig. 17 ist dies beispielhaft der linke Begrenzungsrahmen 58, etwa in gleicher Größe wie den Bildsensor 32 zu definieren. Dies führt zwar dazu, dass Eckbereiche 98 des Bildausschnitts 64 keine Bildinformation enthalten, da der Bildausschnitt 64 an den Ecken über den Bildsensor 32 hinausragt. Allerdings liegen diese verlorenen Eckbereiche 98 vorzugsweise im Bereich 82 außerhalb des insbesondere runden Sehfeldes 68, so dass innerhalb des runden Sehfeldes 68 zumindest im Wesentlichen kein im Sehfeld sichtbarer Bildanteil verloren geht. Dies gilt entsprechend für den rechten Begrenzungsrahmen 56 und die übrigen Begrenzungsrahmen 72, 76.

Zusammenfassend wird eine Korrektur des aufgenommenen Bildes 34 vorgeschlagen, bei welcher ein Ausschnitt des Sensorbildes gespeichert wird. Damit das aufgenommene Bild 34 für den Benutzer stets aufrecht dargestellt wird, wird eine Korrektur der Darstellung vorgenommen, wenn durch die Knickbrückenstellung die Displays 42, 44 zueinander verkippt sind. Hierzu wird aus dem aufgenommenen Bild 34 jeweils ein Ausschnitt genommen, der anschließend das jeweilige Display 42, 44 vollständig füllt. Dieser Ausschnitt wird jeweils entsprechend der Verkippung der Displays verkippt aus dem aufgenommenen Bild 34 ausgeschnitten, und anschließend wird dieser bereits schräggestellte Ausschnitt des aufgenommenen Bildes 34 an das zugehörige Display übertragen und dort dargestellt.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

Bezugszeichenliste:

| | |
|---|---|
| 10 | digitales optisches Gerät |
| 12 | rechter Tubus |
| 14 | linker Tubus |
| 16 | Knickbrücke |
| 17 | Brückenteil |
| 18 | Gelenkeinrichtung |
| 18.0 | zentrales Schwenkgelenk |
| 18.1 | rechtes Schwenkgelenk |
| 18.2 | linkes Schwenkgelenk |
| 18.3 | rechtes Schwenkgelenk |
| 18.4 | linkes Schwenkgelenk |
| 22 | rechtes Okular |
| 24 | linkes Okular |
| 26 | Objektiv |
| 28 | Objektivlinsenanordnung |
| 30 | Szene |
| 31 | Objekt |
| 32 | Bildsensor |
| 32a-d | Kanten des Bildsensors |
| 33 | Bild des Objekts |
| 34 | aufgenommenes Bild |
| 34a-d | Kanten des aufgenommenen Bildes |
| 36 | Bildverarbeitungseinrichtung |
| 42 | rechtes Display |
| 44 | linkes Display |
| 46 | rechtes Auge |
| 48 | linkes Auge |
| 52 | rechte Okularlinsenanordnung |
| 54 | linke Okularlinsenanordnung |
| 56 | rechter Begrenzungsrahmen |
| 56a-d | Kanten des rechten Begrenzungsrahmens |
| 58 | linker Begrenzungsrahmen |
| 58a-d | Kanten des linken Begrenzungsrahmens |
| 62 | rechter Bildausschnitt |
| 64 | linker Bildausschnitt |
| 66 | rechtes Sehfeld |
| 68 | linkes Sehfeld |
| 72 | Zwischen-Begrenzungsrahmen |
| 74 | Zwischen-Ausschnitt |
| 76 | dritter Begrenzungsrahmen |
| 78 | dritter Bildausschnitt |
| 82 | außerhalb des Sehfelds liegender Bereich der Displays |
| 84 | Knickbrückensensor |
| 86 | Einstelleinrichtung |
| 92 | Zahnradgetriebe |
| 94 | Riemengetriebe |

| | |
|---|---|
| 96 | Brückenteil |
| 98 | Eckbereiche |
| A | optische Achse |
| A1 | rechte Okularachse |
| A2 | linke Okularachse |
| d | Sehfelddurchmesser |
| D | Okularabstand |
| h | Displayhöhe |
| H | Horizontale |
| $\alpha$ | Knickwinkel |
| $\alpha$1 | rechter Knickwinkel |
| $\alpha$2 | linker Knickwinkel |
| $\alpha$R | Referenzknickwinkel |
| $\alpha$R - $\alpha$ | Differenzknickwinkel |
| $\alpha$1R | rechter Referenzknickwinkel |
| $\alpha$2R | linker Referenzknickwinkel |
| $\beta$1 | Kippwinkel des rechten Begrenzungsrahmens |
| $\beta$2 | Kippwinkel des linken Begrenzungsrahmens |
| $\delta$1 | Verkippungswinkel des rechten Displays |
| $\delta$2 | Verkippungswinkel des linken Displays |

**Patentansprüche**

1. Digitales optisches Gerät (10) mit Knickbrücke (16) zur Anpassung des Okularabstandes (D) an die Augenweite eines Benutzers, umfassend

ein erstes Okular (22) mit einem ersten elektronischen Display (42) für das erste Auge (46) des Benutzers,
ein zweites Okular mit einem zweiten elektronischen Display für das zweite Auge (48) des Benutzers,
ein Objektiv (26), welches eine optische Achse (A) definiert und eine beobachtete Szene (30) auf einen Bildsensor (32) abbildet,
eine Knickbrücke (16) mit einer Gelenkeinrichtung (18), mittels welcher das erste und zweite Okular (22, 24) schwenkbar miteinander verbunden sind, derart, dass der Okularabstand (D) zwischen dem ersten und zweiten Okular (22, 24) an die individuelle Augenweite des Benutzers anpassbar ist, indem ein Knickwinkel ($\alpha$) der Gelenkeinrichtung (18) verstellt wird,
wobei durch die Verstellung des Knickwinkels ($\alpha$) der Gelenkeinrichtung (18) das erste und/oder zweite Display (42, 44) mechanisch relativ zu dem Bildsensor (32) um eine Achse (A1, A2) parallel zu der optischen Achse (A) verkippt wird,
wobei in dem von dem Bildsensor (32) aufgenommenen Bild (34) ein um einen ersten Kippwinkel ($\beta$1) relativ zu dem Bildsensor (32) verkippter erster Begrenzungsrahmen (56) definiert wird, der einen ersten Ausschnitt (62) aus dem von dem Bildsensor (32) aufgenommenen Bild (34) begrenzt, und

wobei der erste Kippwinkel ($\beta$1) des ersten Begrenzungsrahmens (56) in Abhängigkeit des Knickwinkels ($\alpha$) der Gelenkeinrichtung (18) definiert wird,
wobei das Bild (33) eines Objekts (31) der beobachteten Szene (30) unter Beibehaltung der Orientierung relativ zu der beobachteten Szene (30) an das erste oder zweite Display (42, 44) übertragen und unter Beibehaltung der Orientierung des Bildes (33) des Objekts (31) relativ zu der beobachteten Szene (30) auf dem ersten bzw. zweiten Display (42, 44) dargestellt wird, so dass beim Verstellen des Knickwinkels nicht das dargestellte Bild des Objekts (31) auf dem ersten bzw. zweiten Display (42, 44) gedreht wird, sondern das von dem Bildsensor (32) aufgenommene Bild (34) lediglich schräg ausgeschnitten und die Orientierung des Bildes (33) des Objekts (31) von der Aufnahme mittels des Bildsensors (32) bis zur Darstellung auf dem ersten bzw. zweiten Display (42, 44) relativ zu der beobachteten Szene unabhängig von dem momentan eingestellten Knickwinkel beibehalten wird.

2. Digitales optisches Gerät (10) nach Anspruch 1,

wobei der erste Kippwinkel ($\beta$1) des ersten Begrenzungsrahmens (56) dem Verkippungswinkel der mechanischen Verkippung des ersten oder zweiten Displays (42, 44) entspricht und der von dem verkippten ersten Begrenzungsrahmen (56) begrenzte erste Ausschnitt (62) aus dem von dem Bildsensor (32) aufgenommenen Bild (34) unter Beibehaltung der Orientierung des aufgenommenen Bildes (34) relativ zu der beobachteten Szene (30) an das erste oder zweite Display (42, 44) übertragen und auf dem ersten oder zweiten Display (42, 44) dargestellt wird.

3. Digitales optisches Gerät (10) nach einem der vorstehenden Ansprüche,

wobei der Bildsensor (32) an einem Teil des optischen Geräts (10) befestigt ist, welches beim Verstellen des Knickwinkels ($\alpha$) der Gelenkeinrichtung (18) keine Verkippung relativ zu der beobachteten Szene (30) erfährt,
wobei in dem von dem Bildsensor (32) aufgenommenen Bild (34) ein um einen zweiten Kippwinkel ($\beta$2) relativ zu dem Bildsensor verkippter zweiter Begrenzungsrahmen (58) definiert wird, der einen zweiten Ausschnitt (64) des aus dem Bildsensor (32) aufgenommenen Bildes (34) begrenzt, wobei der zweite Kippwinkel ($\beta$2) des zweiten Begrenzungsrahmens (58) in Abhängigkeit des Knickwinkels ($\alpha$) der Gelenkeinrich-

tung (18) definiert wird,

wobei der von dem verkippten ersten Begrenzungsrahmen (56) begrenzte erste Ausschnitt (62) aus dem von dem Bildsensor (32) aufgenommenen Bild (34) von dem ersten mechanisch verkippten Display (42) dargestellt wird, und

wobei der von dem verkippten zweiten Begrenzungsrahmen (58) begrenzte zweite Ausschnitt (64) aus dem von dem Bildsensor (32) aufgenommenen Bild (34) von dem zweiten mechanisch verkippten Display (44) dargestellt wird.

4. Digitales optisches Gerät (10) nach einem der vorstehenden Ansprüche,

wobei der erste Kippwinkel ($\beta$1) des ersten Begrenzungsrahmens (56) relativ zu dem Bildsensor (32) und der zweite Kippwinkel ($\beta$2) des zweiten Begrenzungsrahmens (58) relativ zu dem Bildsensor (32) entgegengesetzt zueinander definiert werden.

5. Digitales optisches Gerät (10) nach einem der vorstehenden Ansprüche,

wobei die Gelenkeinrichtung (18) ein zentrales Schwenkgelenk (18.0) oder miteinander gekoppelte Schwenkgelenke (18.3, 18.4) umfasst, um welches bzw. welche das erste und das zweite Okular (22, 24) entgegengesetzt geschwenkt werden,

wobei der Bildsensor (32) derart an der Gelenkeinrichtung (18) befestigt ist, dass der Bildsensor (32) beim Verstellen des Knickwinkels ($\alpha$) des ersten Schwenkgelenks (18) während der Benutzung des optischen Geräts (10) horizontal ausgerichtet bleibt, und wobei der erste Kippwinkel ($\beta$1) des ersten Begrenzungsrahmens (56) relativ zu dem Bildsensor (32) und der zweite Kippwinkel ($\beta$2) des zweiten Begrenzungsrahmens (58) relativ zu dem Bildsensor (32) entgegengesetzt gleich sind, und

wobei der erste Kippwinkel ($\beta$1) des ersten Begrenzungsrahmens (56) relativ zu dem Bildsensor (32) dem Verkippungswinkel der mechanischen Verkippung des ersten Displays (42) relativ zu der beobachteten Szene (30) entspricht und der zweite Kippwinkel ($\beta$2) des zweiten Begrenzungsrahmens (58) relativ zu dem Bildsensor (32) dem Verkippungswinkel der mechanischen Verkippung des zweiten Displays (44) relativ zu der beobachteten Szene (30) entspricht.

6. Digitales optisches Gerät (10) nach einem der vorstehenden Ansprüche,

wobei das erste und zweite Display (42, 44) bei

einem Referenzknickwinkel ($\alpha$R) parallel zur Horizontalen (H) verlaufen und ein Differenzknickwinkel ($\alpha$R - $\alpha$) zu dem Referenzknickwinkel ($\alpha$R) bestimmt wird, wobei der erste Kippwinkel ($\beta$1) des ersten Begrenzungsrahmens (56) relativ zu dem Bildsensor (32) als der halbe Differenzknickwinkel und der zweite Kippwinkel ($\beta$2) des zweiten Begrenzungsrahmens (58) relativ zu dem Bildsensor (32) als der halbe Differenzknickwinkel mit entgegengesetzten Drehsinn definiert werden.

7. Digitales optisches Gerät (10) nach einem der Ansprüche 1 bis 4,

wobei die Gelenkeinrichtung ein erstes und zweites unabhängiges Schwenkgelenk (18.1, 18.2) und ein zwischen dem ersten und zweiten Schwenkgelenk (18.1, 18.2) angeordnetes zentrales starres Brückenteil (17) umfasst, wobei das erste Schwenkgelenk (18.1) dezentral dem ersten Okular (22) zugehörig ist und das zweite Schwenkgelenk (18.2) dezentral dem zweiten Okular (24) zugehörig ist und das erste und zweite Okular (22, 24) unabhängig voneinander relativ zu dem zentralen Brückenteil (17) geschwenkt werden können,

wobei der Bildsensor (32) an dem zentralen Brückenteil (17) befestigt ist, und

wobei der erste Kippwinkel ($\beta$1) des ersten Begrenzungsrahmens (56) relativ zu dem Bildsensor (32) in Abhängigkeit von dem Knickwinkel ($\alpha$1) des ersten Schwenkgelenks (18.1) definiert wird und der zweite Kippwinkel ($\beta$2) des zweiten Begrenzungsrahmens (58) relativ zu dem Bildsensor (32) in Abhängigkeit von dem Knickwinkel ($\alpha$2) des zweiten Schwenkgelenks (18.2) definiert wird.

8. Digitales optisches Gerät (10) nach einem der Ansprüche 1 bis 4,

wobei das zweite Display (44) und der Bildsensor (32) in einem gemeinsamen Gehäuseteil (14) angeordnet sind, welches durch die Verstellung des Knickwinkels ($\alpha$) der Gelenkeinrichtung (18) mechanisch relativ zu der beobachteten Szene (30) um eine Achse parallel zu der optischen Achse (A) verkippt wird, so dass durch die Verstellung des Knickwinkels ($\alpha$) der Gelenkeinrichtung (18) das zweite Display (44) und der Bildsensor (32) gemeinsam um denselben Winkel ($\delta$2) um die Achse parallel zu der optischen Achse (A) verkippt werden,

wobei in dem von dem Bildsensor (32) aufgenommenen Bild (34) ein horizontal ausgerichteter Zwischen-Begrenzungsrahmen (72) definiert wird, der einen Zwischen-Ausschnitt (74) aus dem von dem Bildsensor (32) aufgenommenen Bild (34) begrenzt,

wobei der erste und/oder zweite Begrenzungsrahmen (56, 58) in dem Zwischen-Begrenzungsrahmen (72) mit dem ersten und/oder zweiten Kippwinkel ($\beta 1$, $\beta 2$) relativ zu dem horizontal ausgerichteten Zwischen-Begrenzungsrahmen (72) definiert wird, wobei der erste und/oder zweite Kippwinkel ($\beta 1$, $\beta 2$) der mechanischen Verkippung des ersten und/oder zweiten Displays (42, 44) entspricht.

9. Digitales optisches Gerät (10) nach einem der Ansprüche 1 bis 4,

wobei das zweite Display (44) und der Bildsensor (32) in einem gemeinsamen Gehäuseteil (14) angeordnet sind, welches durch die Verstellung des Knickwinkels ($\alpha$) der Gelenkeinrichtung mechanisch relativ zu der beobachteten Szene (30) um eine Achse parallel zu der optischen Achse (A) verkippt wird, so dass durch die Verstellung des Knickwinkels ($\alpha$) der Gelenkeinrichtung (18) das zweite Display (44) und der Bildsensor (32) gemeinsam um denselben Winkel um die Achse parallel zu der optischen Achse (A) verkippt werden,

wobei ein Zwischen-Begrenzungsrahmen (72) für jeden Knickwinkel ($\alpha$) parallel zur Horizontalen (H) definiert wird, so dass der von dem relativ zu dem Bildsensor (32) verkippten Zwischen-Begrenzungsrahmen (72) begrenzte Zwischen-Ausschnitt (74) parallel zur Horizontalen (H) liegt,

wobei in dem von dem Bildsensor (32) aufgenommenen Bild (34) ein relativ zu dem Bildsensor (32) unverkippter dritter Begrenzungsrahmen (76) definiert wird, der einen zu dem Bildsensor parallelen dritten Ausschnitt (78) aus dem von dem Bildsensor (32) aufgenommenen Bild begrenzt,

wobei in dem parallel zur Horizontalen (H) liegenden Zwischen-Ausschnitt (74) der relativ zu dem Zwischen-Ausschnitt (74) verkippte erste Begrenzungsrahmen (56) definiert wird, welcher den ersten Ausschnitt (62) begrenzt und dessen Verkippung zu der beobachteten Szene (30) der mechanischen Verkippung des ersten Displays (42) entspricht,

wobei der erste Ausschnitt (62) an das erste Display (42) übertragen und von dem ersten Display (42) dargestellt wird und der relativ zu dem Bildsensor (32) unverkippte dritte Ausschnitt (78) aus dem von dem Bildsensor (32) aufgenommenen Bild (34) an das zweite Display (44) übertragen und von dem zweiten Display (44) dargestellt wird.

10. Digitales optisches Gerät (10) nach einem der Ansprüche 1 bis 4,

wobei das zweite Display (44) und der Bildsensor (32) in einem gemeinsamen Gehäuseteil (14) angeordnet sind, welches durch die Verstellung des Knickwinkels ($\alpha$) der Gelenkeinrichtung (18) mechanisch relativ zu der beobachteten Szene (30) um eine Achse parallel zu der optischen Achse (A) verkippt wird, so dass durch die Verstellung des Knickwinkels ($\alpha$) der Gelenkeinrichtung (18) das zweite Display (44) und der Bildsensor (32) gemeinsam um denselben Winkel um die Achse parallel zu der optischen Achse (A) verkippt werden,

wobei das erste und zweite Display (42, 44) bei einem Referenzknickwinkel ($\alpha R$) parallel zur Horizontalen verlaufen und ein Differenzknickwinkel ($\alpha R - \alpha$) zu dem Referenzknickwinkel ($\alpha R$) bestimmt wird,

wobei der erste Kippwinkel ($\beta 1$) des ersten Begrenzungsrahmens (56) so groß wie der Differenzknickwinkel ($\alpha R - \alpha$) definiert wird,

wobei in dem von dem Bildsensor (32) aufgenommenen Bild (34) ein relativ zu dem Bildsensor (32) unverkippter dritter Begrenzungsrahmen (76) definiert wird, der einen zu dem Bildsensor (32) unverkippten dritten Ausschnitt (78) aus dem von dem Bildsensor (32) aufgenommenen Bild (34) begrenzt,

wobei der von dem verkippten ersten Begrenzungsrahmen (56) begrenzte erste Ausschnitt (62) aus dem von dem Bildsensor (32) aufgenommenen Bild (34) an das erste Display (42) übertragen und von dem ersten Display (42) dargestellt wird und der relativ zu dem Bildsensor (32) unverkippte dritte Ausschnitt (78) aus dem von dem Bildsensor (32) aufgenommenen Bild (34) an das zweite Display (44) übertragen und von dem zweiten Display (44) dargestellt wird.

11. Digitales optisches Gerät (10) nach einem der vorstehenden Ansprüche,

wobei das erste und/oder zweite Okular (22, 24) durch mechanische Begrenzungen die für den Benutzer sichtbare Fläche des ersten bzw. zweiten Displays beschränkt und insbesondere wobei zumindest in einer Dimension das jeweilige Display (42, 44) nicht größer ist als die sichtbare Fläche.

12. Digitales optisches Gerät (10) nach Anspruch 11,

wobei das erste und/oder zweite Display (42, 44) eine rechteckige, nicht-quadratische oder quadratische Form aufweist und die sichtbare Fläche des ersten und/oder zweiten Displays (42, 44) rund ist und wobei der Durchmesser der runden sichtbaren Fläche zumindest das jeweilige Display in einer Dimension vollständig abdeckt.

13. Digitales optisches Gerät (10) nach einem der vorstehenden Ansprüche,

wobei das erste und/oder zweite Okular (22, 24) durch mechanische Begrenzungen die für den Benutzer sichtbare Fläche des ersten bzw. zweiten Displays (42, 44) beschränkt und im Wesentlichen lediglich Pixel des ersten und/oder zweiten Displays (42, 44), welche innerhalb der sichtbaren Fläche des ersten bzw. zweiten Displays (42, 44) liegen, mit Bilddaten des Bildsensors (32) angesteuert werden.

14. Digitales optisches Gerät (10) nach einem der vorstehenden Ansprüche, ferner umfassend

zumindest einen Knickbrückensensor (84), mittels welchem der Knickwinkel ($\alpha$, $\alpha1$, $\alpha2$) zumindest eines der Schwenkgelenke (18.0, 18.1. 18.2, 18.3, 18.4) gemessen wird, wobei der erste Kippwinkel ($\beta1$) des ersten Begrenzungsrahmens (56) relativ zu dem Bildsensor (32) und/oder der zweite Kippwinkel ($\beta2$) des zweiten Begrenzungsrahmens (58) relativ zu dem Bildsensor (32) automatisch in Ansprechen auf den von dem zumindest einen Knickbrückensensor (84) gemessenen Knickwinkel des zumindest einen Schwenkgelenks (18.0, 18.1, 18.2, 18.3, 18.4) definiert wird oder wobei das optische Gerät (10) eine Einstelleinrichtung (86) aufweist, mittels welcher der Benutzer den ersten Kippwinkel ($\beta1$) des ersten Begrenzungsrahmens (56) relativ zu dem Bildsensor (32) und/oder den zweiten Kippwinkel ($\beta2$) des zweiten Begrenzungsrahmens (58) relativ zu dem Bildsensor (32) manuell definieren kann.

15. Digitales optisches Gerät (10) nach einem der vorstehenden Ansprüche,

wobei das mit dem Bildsensor (32) aufgenommene Bild (34) gespeichert wird und zu einem späteren Zeitpunkt zur Betrachtung auf dem ersten und/oder zweiten Display (42, 44) durch das erste und/oder zweite Okular (22, 24) wieder ladbar ist, wobei die Definition des ersten Kippwinkels ($\beta1$) des ersten Begrenzungsrahmens (56) relativ zu dem Bildsensor (32) und/oder die Definition des zweiten Kippwinkels ($\beta2$) des zweiten Begrenzungsrahmens (58) relativ zu dem Bildsensor (32) zum Zeitpunkt der späteren Betrachtung in Abhängigkeit des bei der späteren Betrachtung eingestellten Knickwinkels ($\alpha$, $\alpha1$, $\alpha2$) der Gelenkeinrichtung (18) vorgenommen wird.

16. Digitales optisches Gerät (10) mit Knickbrücke (16) zur Anpassung des Okularabstandes (D) an die Augenweite eines Benutzers, insbesondere gemäß einem der vorstehenden Ansprüche, umfassend

ein erstes Okular (22) mit einem ersten elektronischen Display (42) für das erste Auge (46) des Benutzers, ein zweites Okular mit einem zweiten elektronischen Display für das zweite Auge (48) des Benutzers, ein Objektiv (26), welches eine optische Achse (A) definiert und eine beobachtete Szene (30) auf einen Bildsensor (32) abbildet, eine Knickbrücke (16) mit einer Gelenkeinrichtung (18), mittels welcher das erste und zweite Okular (22, 24) schwenkbar miteinander verbunden sind, derart, dass der Okularabstand (D) zwischen dem ersten und zweiten Okular (22, 24) an die individuelle Augenweite des Benutzers anpassbar ist, indem ein Knickwinkel ($\alpha$) der Gelenkeinrichtung (18) verstellt wird, wobei durch die Verstellung des Knickwinkels ($\alpha$) der Gelenkeinrichtung (18) das erste und/oder zweite Display (42, 44) mechanisch relativ zu dem Bildsensor (32) um eine Achse (A1, A2) parallel zu der optischen Achse (A) verkippt wird, wobei in dem von dem Bildsensor (32) aufgenommenen Bild (34) ein um einen ersten Kippwinkel ($\beta1$) relativ zu dem Bildsensor (32) verkippter erster Begrenzungsrahmen (56) definiert wird, der einen ersten Ausschnitt (62) aus dem von dem Bildsensor (32) aufgenommenen Bild (34) begrenzt, und wobei der erste Kippwinkel ($\beta1$) des ersten Begrenzungsrahmens (56) in Abhängigkeit des Knickwinkels ($\alpha$) der Gelenkeinrichtung (18) definiert wird.

17. Digitales optisches Gerät (10) nach einem der vorstehenden Ansprüche, wobei das digitale optische Gerät (10) als digitales Fernglas ausgebildet ist.

Fig. 1

Fig. 2

Fig. 3

Fig. 4

# Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

**EP 3 037 863 A1**

Europäisches Patentamt
European Patent Office
Office européen des brevets

# EUROPÄISCHER RECHERCHENBERICHT

Nummer der Anmeldung

EP 15 19 8021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/257648 A1 (MOGAMIYA MAKOTO [JP]) 23. Dezember 2004 (2004-12-23) | 1-7, 11-17 | INV. G02B23/18 G02B23/12 |
| Y | * Abbildungen 1-20 * <br> * Absatz [0042] - Absatz [0070] * <br> * Absatz [0082] - Absatz [0092] * <br> ----- | 8-10 | |
| Y | US 2007/053056 A1 (CHARLESWORTH CHARLES N G [GB]) 8. März 2007 (2007-03-08) <br> * Abbildungen 1-2b * <br> * Absatz [0038] - Absatz [0045] * <br> ----- | 8-10 | |
| A | US 2006/193039 A1 (YAMAUCHI KATSUSHI [JP] ET AL) 31. August 2006 (2006-08-31) <br> * Abbildungen 1-9 * <br> ----- | 1-17 | |
| A | US 5 579 026 A (TABATA SEIICHIRO [JP]) 26. November 1996 (1996-11-26) <br> * Abbildungen 10-16 * <br> ----- | 1-17 | |

**RECHERCHIERTE SACHGEBIETE (IPC)**

G02B

Der vorliegende Recherchenbericht wurde für alle Patentansprüche erstellt

| Recherchenort | Abschlußdatum der Recherche | Prüfer |
|---|---|---|
| München | 21. April 2016 | Beutter, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

28

## ANHANG ZUM EUROPÄISCHEN RECHERCHENBERICHT
## ÜBER DIE EUROPÄISCHE PATENTANMELDUNG NR.

EP 15 19 8021

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2016

| Im Recherchenbericht angeführtes Patentdokument | Datum der Veröffentlichung | Mitglied(er) der Patentfamilie | Datum der Veröffentlichung |
|---|---|---|---|
| US 2004257648 A1 | 23-12-2004 | JP 2005010687 A<br>US 2004257648 A1 | 13-01-2005<br>23-12-2004 |
| US 2007053056 A1 | 08-03-2007 | EP 1673651 A2<br>JP 2007508593 A<br>US 2007053056 A1<br>WO 2005040891 A2 | 28-06-2006<br>05-04-2007<br>08-03-2007<br>06-05-2005 |
| US 2006193039 A1 | 31-08-2006 | CN 1759339 A<br>GB 2416857 A<br>JP 4520941 B2<br>KR 20050109550 A<br>TW I312876 B<br>US 2006193039 A1<br>WO 2004081633 A1 | 12-04-2006<br>08-02-2006<br>11-08-2010<br>21-11-2005<br>01-08-2009<br>31-08-2006<br>23-09-2004 |
| US 5579026 A | 26-11-1996 | US 5579026 A<br>US 5781165 A | 26-11-1996<br>14-07-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11064740 A
- JP 11112851 A
- JP 2004191861 A
- US 7164528 B2
- DE 102012200514 A1
- DE 102012000861 A1
- WO 2013104654 A1